(19) Europäisches Patentamt / European Patent Office / Office européen des brevets

(11) **EP 4 614 879 A1**

(12) **EUROPEAN PATENT APPLICATION**

(43) Date of publication:
**10.09.2025 Bulletin 2025/37**

(21) Application number: **24161561.6**

(22) Date of filing: **05.03.2024**

(51) International Patent Classification (IPC):
**H04L 9/40** (2022.01)    **G06F 21/44** (2013.01)
**G06F 21/57** (2013.01)

(52) Cooperative Patent Classification (CPC):
**H04L 63/0876; H04L 63/126;** G06F 21/44;
G06F 21/57; H04L 63/0823

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nagravision Sarl
1033 Cheseaux-sur-Lausanne (CH)**

(72) Inventors:
• **Villegas, Karine
  Cheseaux-sur-Lausanne (CH)**
• **Bieber, Yann
  Cheseaux-sur-Lausanne (CH)**

(74) Representative: **Novagraaf International SA
Chemin de l'Echo 3
1213 Onex, Geneva (CH)**

(54) **METHOD FOR ATTESTING AUTHENTICITY OF COMPUTING DEVICE**

(57) The method includes the steps performed by a first computing device provisioned with a unique device secret, UDS, of generating an N chained certificate[s] attesting the authenticity of an N set[s] of device-specific data ($D_i$) of the first computing device, and transmitting the N chained certificate[s] to a second computing device.

The step of generating the N chained certificate[s] comprises a generation process that includes:
A. deriving, using a key ladder, a key from the UDS;
B. generating an authentication tag from a set of device-specific data, using the key;
C. generating a certificate, said certificate including the set of device-specific data and the authentication tag;
D. encrypting the set of device-specific data with the key; and
E. providing the encrypted set of device-specific data as an input to the key ladder for a subsequent generation process.

Figure 11

**Description**

TECHNICAL FIELD

The present disclosure relates to device attestation for attesting authenticity of a computing device.

BACKGROUND

In the field of computer security, attestation or remote attestation refers to a method by which a first computing device (e.g., a client) authenticates its own software and/or hardware to a second computing device (e.g., a server). It allows the second computing device to obtain a level of trust in authenticity of the first computing device. This is crucial for establishing trust for example in IoT environments, where devices may be distributed and operated in untrusted environments.

A known method for performing remote attestation is based on Device Identifier Composition Engine (DICE) standard (specification for the Open Profile for DICE v2.5) developed by the Trusted Computing Group (TCG). Each DICE-enabled device is assigned a Unique Device Secret (UDS) during manufacturing. This UDS is typically embedded in the device's hardware and is not accessible or modifiable by mutable software. Each DICE-enabled device is configured to execute a Device Identifier Composition Engine (DICE) that is a process which mixes the UDS with software hashes and other inputs to produce a Compound Device Identifier (CDI). The CDI is a value that represents a hardware and software composition measured by the DICE.

The DICE can be used for attestation to allow the DICE-enabled device to provide verifiable evidence of its identity and operating state, including hardware identity, software image, security-relevant configuration, operating environment, etc. For attestation, the DICE receives input values, each represented by a fixed length, that include: code (64 bytes), configuration data (64 bytes), authority data (64 bytes), mode decision (1 byte), hidden inputs (64 bytes). The DICE can derive an attestation CDI from the combination of all input values using a key derivation function (KDF). This CDI will change across software updates or configuration changes, which is appropriate for attestation.

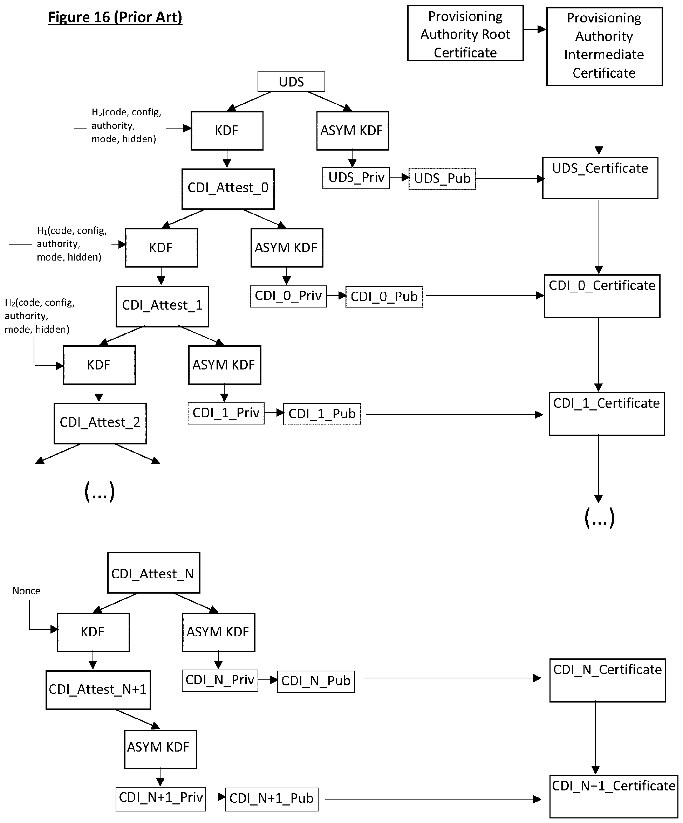

A DICE-enabled device can generate a chain of certificates (i.e., a plurality of certificates that chain together), based on a layered DICE Open profile scheme that is illustrated in figure 16, to attest authenticity of the device.

At the top of figure 16, the DICE Open profile scheme includes the steps of:

- deriving an asymmetric key pair UDS_Priv, UDS_Pub from the UDS used as a key with an asymmetric KDF;
- generating an UDS certificate for the UDS-derived public key UDS_Pub, signed by an external authority;
- measuring DICE input values $H_0$(code, config, authority, mode, hidden);
- deriving, through a KDF, an attestation CDI CDI Attest 0 from the UDS used as a key with the input values $H_0$(code, config, authority, mode, hidden) ;
- deriving an asymmetric key pair CDI_0_Priv, CDI_0_Pub from the attestation CDI CDI_Attest_0 used as a key with an asymmetric KDF;
- generating a CDI certificate CDI_0_Certificate for the CDI-derived public key CDI_0_Pub, that is signed using the UDS-derived private key UDS_Priv.

Then, at each lower level i with index i from 1 to N in figure 16, the DICE Open profile scheme includes the steps of:

- measuring DICE input values $H_i$(code, config, authority, mode, hidden);
- deriving, through the KDF, an attestation CDI CDI_Attest_i from the previous attestation CDI CDI_Attest_i-1 used as a key with the input values $H_i$(code, config, authority, mode, hidden);
- deriving an asymmetric key pair CDI_i_Priv, CDI_i_Pub from the previous attestation CDI CDI_Attest_i-1 used as a key with the asymmetric KDF;
- generating a CDI certificate CDI_i_Certificate for the CDI-derived public key CDI_i_Pub, that is signed using the previous CDI-derived private key CDI_i-1_Priv.

The different layers of the DICE Open profile scheme can use different sets of input values $H_i$(code, config, authority, mode, hidden).

When generating certificates from level 1 to N, at each level i, the authority is the previous CDI key pair CDI_i-1_Priv, CDI_i-1_Pub.

The implementation of the DICE Open profile on devices has several drawbacks.

A main drawback is that the DICE Open profile scheme is vulnerable in case of key leakage and/or if a key has been compromised. The second computing device (e.g., a server) receives the chain of certificates from the first computing device (e.g., a client), and checks that the public key at one level i-1 validates the signature of the certificate at the next level i. In other words, the second computing device checks that the public key CDI_i-1_Pub validates the signature of CDI_i_certificate that has been signed with the private key CDI_i-1_Priv. But the second computing device cannot check if this private key CDI_i-1_Priv has been correctly derived from the secret CDI_Attest_i-1. If, at one layer of the DICE Open profile scheme, the symmetric secret (i.e, the attestation CDI) has been compromised, the second computing cannot detect that the CDI-derived private key has been generated from a compromised secret (i.e, a compromised attestation CDI) with the asymmetric KDF.

Thus, if the attestation CDI derived from all the input values is compromised by a malicious person at any level i of the DICE Open profile scheme, this attestation CDI can however be used as a secret key to derive a CDI-derived key pair with the asymmetric KDF, and this key pair can be used to sign the next CDI certificate. The second computing device will validate that this next certificate CDI certificate is signed by the previous CDI-derived private key using the corresponding CDI-derived public key and thus chained to the previous CDI certificate, but cannot detect that the attestation CDI, from which the CDI-derived key pair was derived, has been compromised. In such a case, the second computing device will incorrectly validate the chain of certificates and attest the authenticity of the first computing device, which is a problem.

The DICE Open profile has other drawbacks:

It requires specific hardware and software means supporting DICE.

It requires to report all the UDS_certificates. The UDS and the associated certificate UDS_certificate are pre-generated and injected during a manufacturing process in each DICE-enabled device, in a secure environment. The UDS certificates of all manufactured devices must be reported to an entity that will make them available to the second computing device (e.g., a server) responsible for validating the certificate chain.

Therefore, there is a need for improving the situation. In particular, it is desired for the attestation scheme to be more robust to key compromise and/or key leakage.

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

The present disclosure concerns a method for attesting authenticity of a first computing device, said first computing device being provisioned with a unique device secret, UDS, the method including the steps, performed by the first computing device, of:

generating an N chained certificate[s], the N chained certificate[s] attesting the authenticity of an N set[s] of device-specific data of the first computing device; transmitting the N chained certificate[s] to a second computing device; wherein the step of generating the N chained certificate[s] comprises a generation process that includes the steps of:

A. deriving, using a key ladder, a key from the UDS;
B. generating an authentication tag from a set of device-specific data, using the key;
C. generating a certificate, said certificate including the set of device-specific data and the authentication tag;
D. encrypting the set of device-specific data with the key; and
E. providing the encrypted set of device-specific data as an input to the key ladder for a subsequent generation process.

The method may include the steps of

successively executing N generation processes of generating one of N chained certificates, each certificate attesting the authenticity of one of N sets of device-specific data of the first computing device; transmitting the N chained certificates to a second computing device; wherein each generation process includes the steps of:

A. deriving, using a key ladder, at least one key from the UDS;
B. generating an authentication tag from one of the N sets of device-specific data, using the at least one derived key; and
C. generating the certificate, said certificate including said one of the N sets of device-specific data and the authentication tag; and

from the first to N-1$^{th}$ certificate generation process:

D. encrypting the one of the N sets of device-specific data with the at least one derived symmetric key; and
E. providing the encrypted set of device-specific data as an input to the key ladder for the subsequent generation process.

The present method for attesting authenticity of a computing device relies on a key ladder. Such key ladder can be found in many computing devices, for example in chipsets. The generation of the chained certificates is layered: it includes successively executing generation processes of generating one of a plurality of chained certificates. At each layer, the key ladder derives a key, for example a symmetric key, from the UDS used as a key and the first computing device generates a certificate including an authentication tag (e.g., a CMAC (block cipher-based message authentication code)), generated with said UDS-derived key. Furthermore, at each layer, a set of device-specific data is encrypted with the UDS-derived key produced by the key ladder, and then, at the subsequent layer, this encrypted set of device-specific data is used as input value by the key ladder to derive another key from the UDS. This allows to chain the certificates that each include an authentication tag, generated with the UDS-derived key from the key ladder.

The present method allows the second device to validate the keys used to create the certificate chain. Furthermore, if for example one encrypted set of device-specific data produced during one certificate generation process and used as input to the key ladder for the subsequent certificate generation process, or an UDS-derived key, or even the UDS is compromised, the rest of the certificate chain generation cannot be simply implemented in software without breaking the internals of the key ladder and the UDS key. It would not be sufficient for an attacker to compromise the encrypted data produced in a certificate generation process or an UDS-derived key or even the UDS. The attacker would also need to compromise the key ladder implementation details to produce a chain of certificates allowing the second computing device to carry out a valid attestation. The security of the present attestation scheme cannot be simply broken if the UDS key or an UDS-derived key or the encrypted data produced during one certificate generation process and used as input to the key ladder for the subsequent certificate generation process is leaked or compromised. As a result, the present attestation method is extremely robust against attacks.

The present method can be easily implemented on existing devices that already include a key ladder.

According to an embodiment, in the step A., the key ladder has at least two levels and carries out the steps of:

- receiving a higher-level input value; and
- deriving a higher-level key from the UDS used as a key or from a UDS-derived key with the higher-level input value.

Thanks to that, the UDS does not need to be provided to the second computing device. The second computing device only needs to have the higher-level key derived from the UDS, that is less sensitive data and can be renewed in case of exposure.

Advantageously, the higher-level input value received by the key ladder includes a predetermined constant that is the same for all the generation processes.

In an embodiment, in the step A., the key ladder further carries out the step of deriving the key from the higher-level key with a lower-level input value.

In an embodiment, in the step A.,

- for a first generation process, the key ladder receives a predetermined initial value as lower-level input value;
- for each of subsequent generation processes, the key ladder receives the encrypted set of device-specific data provided by the preceding generation process as lower-level input value.

In a first embodiment, the steps B. and D. are combined by executing an authenticated encryption algorithm so as to simultaneously encrypt the set of device-specific data and generate the authentication tag from the set of device-specific data with the key derived from the UDS in the step A.

In a second embodiment, in the step A., the key ladder derives two keys, different from one another, from the UDS used as a key, and:

- in the step B., the authentication tag is generated with one of the two keys;
- in the step C., the set of device-specific data is encrypted with the other of the two keys.

Advantageously, the two keys can be separately derived from the UDS by the key ladder using respectively a first higher-level input value and a second higher-level input value, different from one another.

The authentication tag can be generated with a block cipher-based message authentication code algorithm.

In an embodiment, the method may comprise a generation process of generating a final certificate, said generation process including the steps of:

- receiving challenge data from the second computing device;
- receiving, by a key ladder, an encrypted set of device-specific data provided by the preceding generation process;
- deriving, by the key ladder, a key from the UDS using said encrypted set of device-specific data as input data;
- generating a final tag from the challenge data using the key;
- generating the final certificate including the challenge data and the final tag.

For example, the step A. can be performed by executing a cryptographic algorithm including at least one of a decryption algorithm and an encryption algorithm, at each of a plurality of levels of the key ladder.

The present disclosure also concerns a method for attesting the authenticity of a first computing device provisioned with a unique device secret UDS, by a second computing device provisioned with a key that is derived from the UDS of the first computing device, the method comprising the steps of:

- receiving, by the second computing device, from the first computing device, an N chained certificate[s] generated by performing the method previously defined;
- verifying, by the second computing device, the validity of the N chained certificate[s];

wherein the step of verifying the validity of the N chained certificate[s] comprises a verification process, performed by the second computing device, that includes the steps of:

F. deriving, by a key derivation module, a key from said provisioned key;
G. generating a verification tag from a set of device-specific data included in a certificate to be verified using the key;
H. comparing the verification tag and an authentication tag included in the certificate to be verified;
I. if the verification tag and the authentication tag match, validating the certificate;
J. encrypting the set of device-specific data included in the certificate to be verified with the key; and
K. providing the encrypted set of device-specific data as an input to the key derivation module for a subsequent verification process.

In an embodiment, the method can include the steps of:

- receiving by the second computing device, from the first computing device, N chained certificates generated by performing the method previously defined;
- verifying by the second computing device the validity of the N chained certificates;

wherein the step of verifying the validity of the N chained certificates includes successively executing N verification processes of verifying one certificate of the N chained certificates, and each verification process includes the steps, performed by the second computing device, of:

F. deriving, by a key derivation module, at least one symmetric key from said at least one provisioned symmetric key;
G. generating a verification tag from the set of device-specific data included in the certificate to be verified using the at least one derived symmetric key;
H. comparing the verification tag and the authentication tag included in the certificate to be verified;
I. if the verification tag and the authentication tag match, validating the certificate; and

from the first to N-1$^{th}$ certificate verification process:

J. encrypting the set of device-specific data included in the certificate to be verified with the at least one derived symmetric key; and
K. providing the encrypted set of device-specific data as an input to the key derivation module for the subsequent certificate verification process.

In an embodiment, said provisioned key may correspond to the higher-level key generated by the key ladder in the step A of the method previously defined.
Advantageously, in a first verification process, the step F includes receiving as input, by the key derivation module, a predetermined initial value that is the same as the predetermined initial value received by the key ladder as lower-level input in the first generation process of the method as previously defined.
The present disclosure also concerns:

- a first computing device comprising at least one key ladder and means adapted to execute the steps of the method previously defined;
- a second computing device, comprising at least one key derivation module and means adapted to execute the steps of the method previously defined;
- a system comprising the above-defined first computing device and the above-defined second computing device;
- a computer program comprising instructions to cause the above-defined first computing device to execute the steps of the method previously defined;
- a computer-readable medium having stored thereon the above-defined computer program;
- a computer program comprising instructions to cause the above-defined second computing device to execute the steps of the method previously defined; and
- a computer-readable medium having stored thereon the above-defined computer program.

BRIEF DESCRIPTION OF THE DRAWINGS

Example embodiments will become more fully understood from the detailed description given herein below and the accompanying drawings, which are given by way of illustration only and thus are not limiting of this disclosure.

Figure 1 illustrates a system including a first computing device and a second computing device.

Figure 2 shows a block diagram of the first computing device, according to an embodiment.

Figure 3 shows a block diagram of an attestation engine of the first computing device, according to an embodiment.

Figure 4 shows a block diagram of the second computing device, according to an embodiment.

Figure 5 shows a block diagram of a verification engine of the second computing device, according to an embodiment.

Figure 6 shows a flow chart of an attestation method for attesting authenticity of a first computing device, according to an embodiment.

Figures 7A and 7B represent flow charts of a provisioning process for the first computing device and a provisioning process for the second computing device, according to an embodiment.

Figure 8 represents a flow chart of a first or top certificate generation process, according to a first Embodiment.

Figure 9 represents a flow chart of a subsequent certificate generation process, according to the first Embodiment.

Figure 10 represents a flow chart of a last or bottom certificate generation process, according to the first Embodiment.

Figure 11 represents a block diagram of a method for generating a chain of certificates, carried out by the first computing device, according to the first Embodiment.

Figure 12 represents a flow chart of a first certificate verification process, according to the first Embodiment.

Figure 13 represents a flow chart of a subsequent certificate verification process, according to the first Embodiment.

Figure 14 represents a flow chart of a last or bottom certificate verification process, according to the first Embodiment.

Figure 15 represents a block diagram of a method for verifying a chain of certificates, carried out by the second computing device, according to the first Embodiment.

Figure 16 represents a block diagram of a method for generating a chain of certificates, carried out by a first computing device, according to the prior art.

It should be noted that these drawings are intended to illustrate various aspects of devices, methods and structures used in example embodiments described herein. The use of similar or identical reference numbers in the various drawings is intended to indicate the presence of a similar or identical element or feature.

DETAILED DESCRIPTION

The following detailed description describes various features and functions of the disclosed systems and methods with reference to the accompanying figures. The illustrative system, device and method embodiments described herein are not meant to be limiting. It may be readily understood by those skilled in the art that certain aspects of the disclosed systems, devices and methods can be arranged and combined in a wide variety of different configurations, all of which are contemplated herein.

First Embodiment

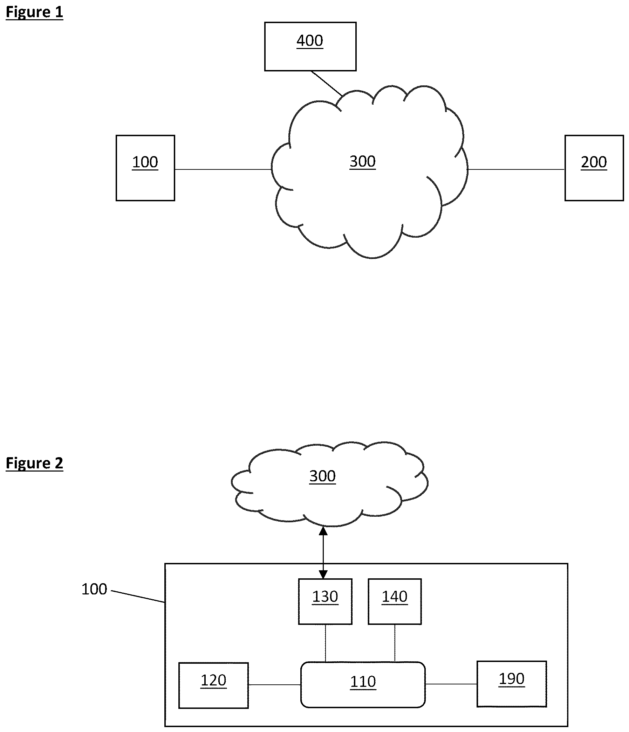

Figure 1 shows a system including a first computing device 100 and a second computing device 200, according to a first Embodiment. The two computing devices 100, 200 can communicate with one another through a communication network and/or a communication link 300.

The computing devices 100, 200 may correspond to any physical or virtual computing device, such as a mobile device (e.g., a smartphone), a desktop computer, a laptop computer, a IoT device, a tablet, a game console, a server, etc. Each computing device may be a single entity, multiple entities or a distributed system (e.g., a cloud system). In an illustrative and non-limitative example, the first device and the second device may be a client device and a server device, respectively.

The communication network or communication link 300 can be of any type (e.g., mobile telecommunications network(s), wireless local area network (WLAN or Wi-Fi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs), Internet Protocol multimedia subsystems (IMS), ... or any combination thereof).

Figure 2 schematically illustrates the first computing device 100, according to the first Embodiment. The first computing device 100 may include at least one processor 110, at least one memory or memory means 120 connected to the processor 110, and at least one communication interface 130 connected to the processor 110 and configured to communicate through a communication network and/or a communication link 300. Optionally, the first computing device 100 may further include one or more user interfaces 140 (e.g., keyboard, mouse, display screen, etc.) connected to the processor 110.

The memory or memory means 120 may be or include a random-access memory (RAM), cache memory, non-volatile memory, backup memory (e.g., programmable or flash memories), read-only memory (ROM), a hard disk drive (HDD), a solid state drive (SSD) or any combination thereof. The ROM of the memory means 120 may be configured to store, amongst other things, an operating system of the device 100 and/or one or more computer program code of one or more software applications. The RAM of the memory means 120 may be used by the processor 110 for the temporary storage of data.

The processor 110 may be configured to store, read, load, and/or execute instructions (e.g., program instructions, computer program code) stored in the memory means 120 such that, when the instructions are executed by the processor 110, it causes the computing device 100 to perform one or more or all steps of a method described herein for the concerned device 100.

In the present disclosure, the first computing device 100 includes an attestation engine 190. A role of this attestation engine 190 is to produce or generate a chain of digital certificates for attesting authenticity of the first computing device 100, i.e., for providing verifiable evidence of the authenticity of the first computing device 100 to the second computing device 200 or any other party.

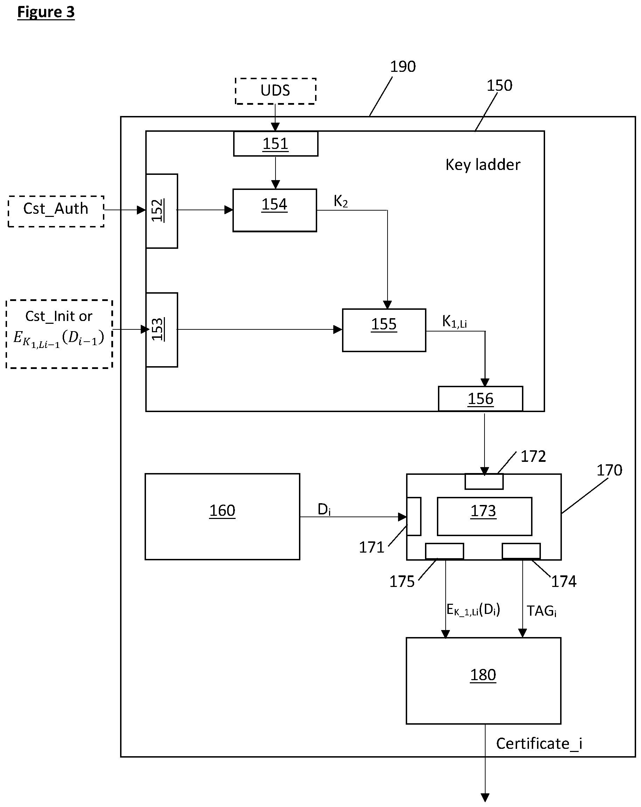

Figure 3 illustrate the attestation engine 190 according to the first Embodiment.

As shown in figure 3, the attestation engine 190 may include a key ladder 150 configured to derive multiple keys from one master key. This key ladder 150 may be implemented with hardware means and/or software means (i.e., hardware, or software, or a mix of software and hardware). The key ladder 150 may include at least two stages or levels to derive at least two keys from the master key. As an illustrative and non-limitative example, the key ladder 150 may be based on the specifications ETSI TS 103 162 V1.1.1 (2010-10).

Figure 3 schematically represents a functional diagram of the key ladder 150 according to an embodiment that is only illustrative and is not limitative. In this embodiment, the key ladder 150 has two stages or levels. The key ladder 150 may include:

- a master key input interface 151,
- a higher-level input interface 152,
- a lower-level input interface 153,
- a higher-level key derivation module 154,
- a lower-level key derivation module 155, and
- an output interface 156.

The higher-level key derivation module 154 may be connected to the master key input interface 151 and to the higher-level input interface 152. The lower-level key derivation module 155 may be connected to an output of the higher-level key derivation module 154, to the lower-level input interface 153, and to the output interface 156.

The higher-level derivation module 154 is configured to derive an intermediate key, or higher-level derived key, from the key here received through the master key input interface 151, with a higher-level input value received through the input interface 152. The lower-level derivation interface 155 is configured to derive a final key, or lower-level derived key, from this intermediate key with a lower-level input value received through the input interface 153.

The key derivation modules 154, 155 may be cryptographic modules configured to perform cryptographic operations (i.e., execute one or more cryptographic algorithms) to derive a key from another key with an input value. For example, the key derivation modules 154, 155 may be configured to execute a decryption algorithm or an encryption algorithm such as AES (Advanced Encryption Standard), Triple DES (Data Encryption Security), .... In an illustrative and non-limitative embodiment, the key derivation modules 154, 155 are two decryption modules. The operation of the key ladder 150 will be described in more detail in the description of the method.

In other embodiments, the key ladder 150 may include more than two stages or levels. For example, the key ladder 150 may include at least one additional key derivation module, in addition the two key derivation modules 154, 155. The additional key derivation module(s) may be configured to derive an intermediate key from the master key and provide this intermediate key to the higher-level derivation module 154, instead of the master key, for derivation purpose.

More generally, in some embodiments, the key ladder 150 may be configured to execute one or more additional cryptographic or transformation algorithms, in addition to those carried out by the two key derivation modules 154, 155, at any stage of the key ladder 150, for example to transform the UDS, and/or at least one input value received by the key ladder 150, and/or at least one UDS-derived key produced by the key ladder 150. The additional cryptographic or transformation algorithm(s) may include at least one of an encryption algorithm, a decryption algorithm, a key derivation function, or any combination thereof. The additional cryptographic or transformation algorithms may use global cryptographic keys (i.e., keys that can be provisioned to multiple first computing devices). In any case, the second computing device 200 should be configured in a similar manner to the first computing device 100 to be able to perform similar computations.

The attestation engine 190 may include a measurement module or collection module 160 configured to measure or collect or determine a set of device-specific data $D_i$, as will be described in more detail in the description of the method.

In the first Embodiment, the attestation engine 190 may include an authenticated encryption (AE) module 170. This AE module 170 may comprise a data input interface 171 configured to receive input data to encrypt, a key input interface 172, an authenticated encryption block 173 connected to the data input interface 171 and to the key input interface 172, and two output interfaces 174, 175. The data input interface 171 may be connected to the measurement module 160. The key input interface 172 may be connected to the output interface 156 of the key ladder 150, and is configured to receive a secret key (i.e., a symmetric key).

The authenticated encryption (AE) block 173 may be configured to execute an authenticated encryption algorithm to encrypt the input data and generate an authentication tag from this input data, with the secret key received through the key input interface 172. As illustrative and non-limitative examples, the AE block 173 may use an authenticated encryption algorithm such as GCM (Galois/Counter Mode), CCM (Counter with CBC-MAC) or a sponge-based construction.

The authentication tag may be for example a message authentication code or MAC, for example a CMAC (i.e., a block cipher-based message authentication code), HMAC (i.e., Hash-based message authentication code), or KMAC (i.e., KECCAK Message Authentication Code). The first output interface 174 may be configured to output this authentication tag.

The second output interface 175 may be configured to output the encrypted data.

The attestation engine 190 may include a certificate generator 180 configured to create or generate each certificate Certificate_i of a chain of certificates, as will be described in more detail in the description of the method.

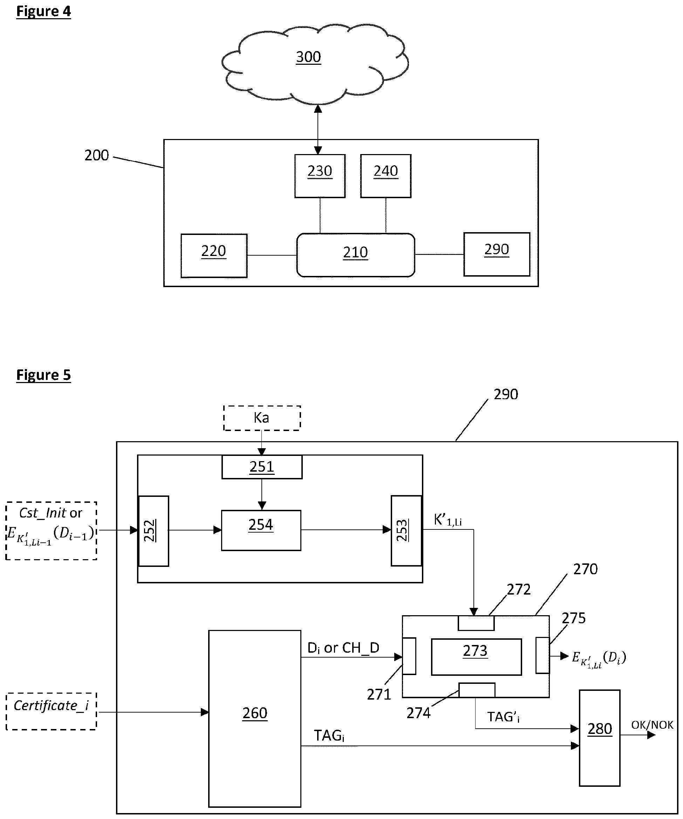

Figure 4 schematically illustrates the second computing device 200, according to the first Embodiment. The second computing device 200 may include at least one processor 210, at least one memory or memory means 220, and at least one communication interface 230 connected to the processor 210 and configured to communicate through a communication network 300 or a communication link. Optionally, the second computing device 200 may further include one or more user interfaces 240 (e.g., keyboard, mouse, display screen, etc.) connected to the processor 210.

The memory or memory means 220 may be or include a random-access memory (RAM), cache memory, non-volatile memory, backup memory (e.g., programmable or flash memories), read-only memory (ROM), a hard disk drive (HDD), a solid-state drive (SSD) or any combination thereof. The ROM of the memory means 220 may be configured to store, amongst other things, an operating system of the device 200 and/or one or more computer program code of one or more software applications. The RAM of the memory 220 may be used by the processor 210 for the temporary storage of data.

The processor 210 may be configured to store, read, load, and/or execute instructions (e.g., program instructions, computer program code) stored in the memory means 220 such that, when the instructions are executed by the processor 210, it causes the computing device 200 to perform one or more or all steps of a method described herein for the concerned device 200.

In the present disclosure, the second computing device 200 includes a verification engine 290. A role of this verification engine 290 is to verify the validity of a chain of digital certificates associated with the first computing device 100, or with another party, for attesting the authenticity of this first computing device 100 or other party.

Figure 5 illustrate the verification engine 290 according to the first Embodiment.

The verification engine 290 may include a key derivation module 250. This key derivation module 250 may include a key input interface 251, a value input interface 252 and an output interface 253. The key input interface 251 may be configured to receive a key Ka that corresponds (i.e., for example is equal to or the same as) to the higher-level UDS-derived key (i.e., intermediate key) provided at the output of the higher-level key derivation module 154 of the key ladder 150 of the first computing device 100. The key Ka may be pre-stored in the memory means 220. The key derivation module 250 may be similar to the lower-level key derivation module 155 of the key ladder 150 of the first computing device 100. It may be configured to execute the same cryptographic algorithm(s) for deriving a key from another key as this lower-level key derivation module 155, as will be described in more detail in the description of the method.

The verification engine 290 may include an authenticated encryption (AE) module 270. This module 270 may be similar to the AE encryption module 170 of the first computing device 100. It may comprise a data input interface 271 configured to receive input data to encrypt, a key input interface 272, an encryption block 273 connected to the data input interface 271 and the key input interface 272, and two output interfaces 274, 275. The data input interface 271 may be connected to an extractor module 260 configured to extract data for a certificate to verify.

The key input interface 272 may be connected to the output interface 253 of the key derivation module 250. It is configured to receive a secret key (i.e., a symmetric key). The encryption block 273 may be configured to execute an authenticated encryption algorithm to encrypt the input data extracted from the certificate and generate an authentication tag from this input data, with the secret key received through the key input interface 272. This authenticated encryption algorithm may be the same as the one executed by the AE module 170 of the first computing device 100. The first output interface 274 may be configured to output this authentication tag. The second output interface 275 may be configured to output the encrypted data.

The verification engine 290 may include a certificate verification module 280 configured to verify each certificate of a chain of certificates, based on a comparison between an authentication tag extracted from said certificate and a verification tag generated by the second computing device 200, as will be described in more detail in the description of the method. The certificate verification module 280 may be connected in input to the extractor 160 and to the output interface 275 of the AE module 270.

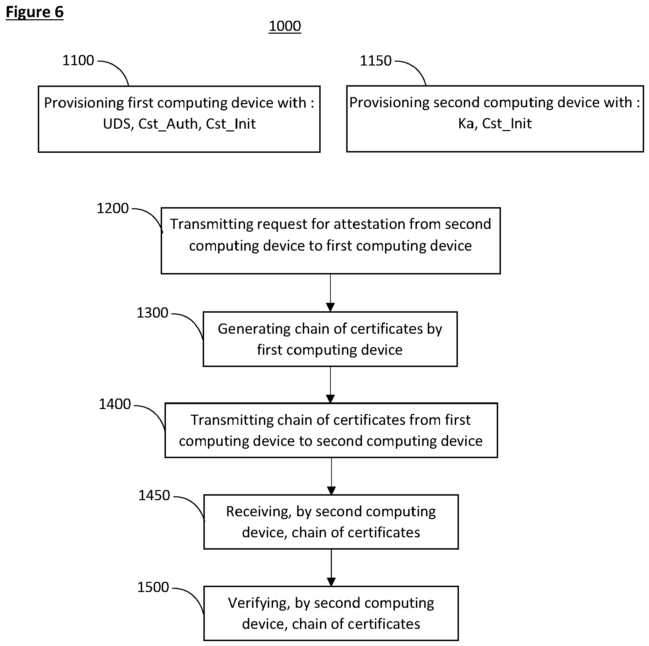

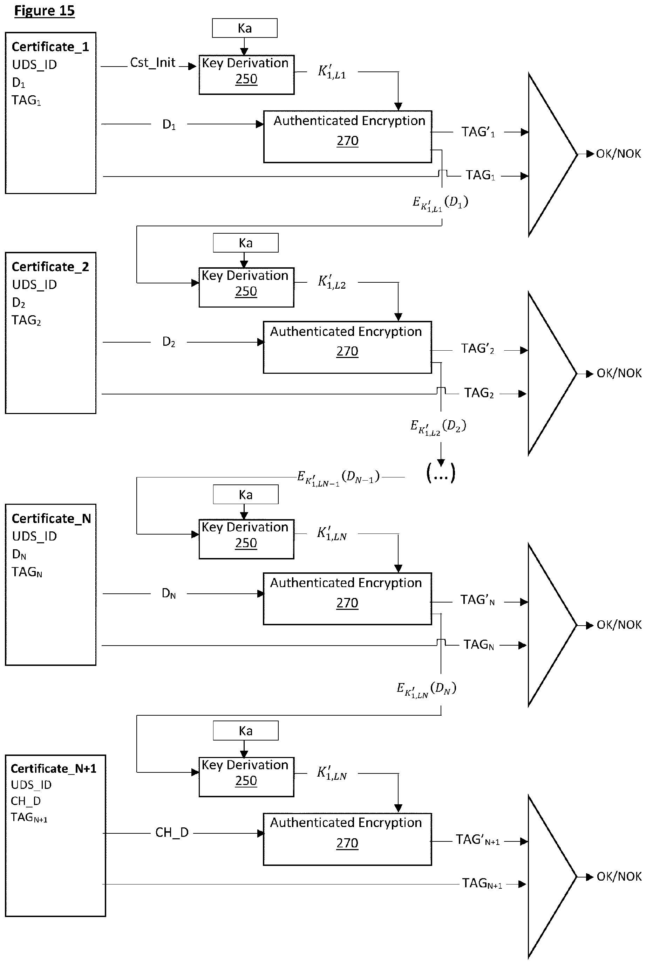

An attestation method for attesting authenticity of the first computing device 100 will now be described, according to an embodiment, with reference to figures 6 to 15.

Figure 6 represents a flow chart of an attestation method 1000 for attesting device's authenticity, by which the first computing device 100 may provide verifiable evidence of its authenticity to the second computing device 200.

It should be appreciated by those skilled in the art that any functions, engines, block diagrams, flow diagrams, state transition diagrams, flowchart and/or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe a set of steps as a sequential process, many of the steps may be performed in parallel, concurrently, or simultaneously. Also, some steps may be omitted, combined or performed in different order. A process may be terminated when its steps are completed but may also have additional steps not disclosed in the figure or description.

Each described process, function, engine, block, step described herein can be implemented in hardware, software, firmware, middleware, microcode, or any suitable combination thereof.

When implemented in software, firmware, middleware or microcode, instructions to perform the necessary tasks may be stored in memory means that may be or not included in a host device or host system configured to execute the instructions. The instructions may be transmitted over a computer-readable medium and be loaded onto the host device or host system. The instructions are configured to cause the host device or host system to perform one or more functions disclosed herein. For example, as mentioned above, at least one memory may include or store instructions, the at least one memory and the instructions may be configured to, with at least one processor, cause the host device or host system to perform the one or more functions.

The attestation method 1000 may include a provisioning process 1100 for provisioning the first computing device 100 with a unique device secret UDS and a provisioning process 1150 for provisioning the second computing device 200 with at least one UDS-derived key Ka. The provisioning processes 1100, 1150 may be performed by a provisioning infrastructure 400.

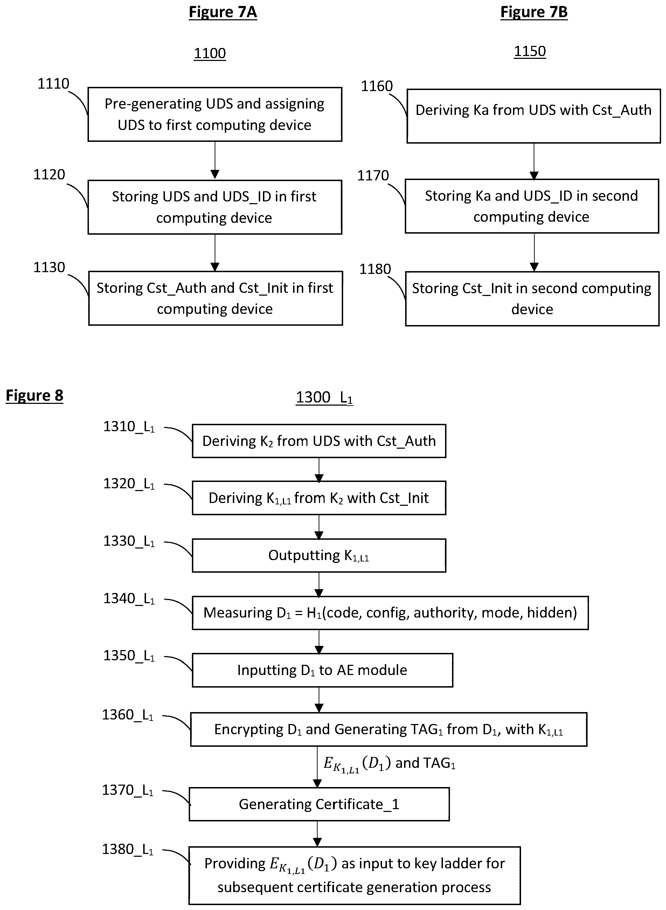

The provisioning processes 1100, 1150 are illustrated in more detail in figures 7A and 7B, according to an embodiment.

The provisioning process 1100 may include a step 1110 of generating the UDS and uniquely assigning the UDS to the first computing device 100. For example, the UDS may be a random or pseudo-random value. Then, in a following step 1120, the UDS may be securely stored in the first computing device 100, for example during a manufacturing process in a secure environment. The UDS may be embedded in the device's hardware. The UDS may be associated with a UDS unique identifier, UDS_ID. The UDS identifier UDS_ID may be generated upon generation of the UDS, and/or it may correspond to a device unique identifier uniquely assigned to the first computing device 100. This unique identifier UDS_ID can be stored in the first computing device 100, for example in association with the UDS. After provisioning 1100, this UDS may not be accessible or modifiable by mutable software in the computing device 100, to avoid any leakage of the UDS out of the computing device 100.

The provisioning process 1100 may further include a step 1130 of provisioning the first computing device 100 with at least one higher-level input value Cst_Auth and an initial value Cst_Init for the lower-level input 153 of the key ladder 150. For example, the higher-level input value Cst_Auth and the initial value Cst_Init are random or pseudo-random values, that may be different, both generated by the provisioning infrastructure 400. The higher-level input value Cst_Auth and the initial value Cst_Init can be stored in the memory means 120 of the first computing device 100.

In a system including a plurality of first computing devices 100, the UDS may be different for each first computing device 100 but the pair of input values Cst_Auth, Cst_Init may be global input values that are the same for all the first computing devices 100. Alternatively, different pairs of input values could be used for the different first computing devices 100 respectively.

The step 1120 of provisioning the first computing device 100 with the UDS may preferably be performed at device manufacturing time (i.e., when the first computing device 100 is manufactured). Advantageously, the UDS can never be changed. The step 1130 of provisioning the first computing device 100 with the values Cst_Auth, Cst_Init may be performed at manufacturing time and/or later, at any time, and can be changed or updated for example with a software update.

The provisioning process 1150 allows to provision the second computing device 200 with the UDS-derived key Ka derived from the UDS that has been pre-generated and assigned to the first computing device 100, and with the initial value Cst_Init. The provisioning process 1150 can be advantageously performed by the provisioning infrastructure 400 holding the UDS at least during the provisioning. The provisioning process 1150 may include a step 1160 of deriving the key Ka from the UDS with the predetermined input value Cst_Auth. This key Ka corresponds to (i.e., is equal to or the same as) the higher-level key or intermediate key $K_2$ that will be derived in operation by the key ladder 150 of the first computing device 100, from the UDS used as a key with the higher-level input value Cst_Auth. In the step 1160, the key Ka may be derived from the UDS by performing the same cryptographic operation(s) as the one(s) that will be carried out by the higher-level key derivation module 154 of the key ladder 150 in operation. The provisioning process 1150 may further include a step 1170 of transmitting the key Ka, its associated UDS identifier UDS_ID, and of storing said key Ka and said associated UDS identifier UDS_ID in the memory means 220 of the second computing device 200. The provisioning process 1150 may further include a step 1180 of transmitting the initial value Cst_Init to the second computing device 200, for example through the network 300, and of storing said initial value Cst_Init in the memory means 220 of the second computing device 200. The steps 1170 and 1180 may be combined.

The steps 1170 and 1180 of provisioning the second computing device 200 with the Ka and Cst_Init may be performed at manufacturing time and/or later, at any time, and can be changed or updated for example with a software update.

After the provisioning processes 1100, 1150, the provisioning infrastructure 400 that has pre-generated the UDS may not retain this UDS, for security reasons. The UDS of the first computing device 100 may be deleted from the provisioning infrastructure 400 and may thus be securely held only in the first computing device 100. However, in case it is desired to change or update Cst_Auth and Ka over time, the UDS may be securely kept, for example in a very high security basement, and be only used if it is needed to generate a new Ka with a new Cst_Auth.

With reference to figure 6, the attestation method 1000 may include a step 1200 of transmitting a request for attesting authenticity from the second computing device 200 to the first computing device 100.

Upon reception of this request, the first computing device 100 may generate a plurality of chained certificates (i.e., a chain of certificates) in a step 1300, and transmit the chain of certificates to the second computing device 200 in a step 1400. The chained certificates may be transmitted all together or could be transmitted successively and/or separately.

However, the step 1200 of transmitting a request for attesting authenticity is optional. The step 1300 of generating a chain of certificates may be carried out by the first computing device 100 on its own initiative, or upon reception of a request from a third party, or upon occurrence of a predetermined event.

The attestation method 1000 may further include a step 1500 of verifying the validity of the chained certificates, carried out by the second computing device 200.

Optionally, the second computing device 200 may transmit challenge data CH_D to the first computing device 100, to prevent anti-replay attacks. The challenge data CH_D may for example include a cryptographic nonce (i.e., a number randomly or pseudo-randomly generated by the second device 200). The challenge data CH_D may be embedded in the request for attesting authenticity transmitted from the second computing device 200 to the first computing device 100 in the step 1200. Alternatively, it may be transmitted separately. The challenge data (e.g., a nonce) may be issued in the attestation method 1000 to ensure that an old chain of certificates cannot be reused in a replay attack. In an embodiment, the challenge data CH_D (e.g., a nonce) is transmitted from the second computing device 200 to the first computing device 100 in association with an expiration time (for example 1 minute) and optionally the identity of the first computing device 100. Thus, the first computing device 100 has to provide the chain of certificates associated with this challenge-data CH_D (e.g., the nonce) within the expiration time. Otherwise, the attestation would be refused.

The chain of certificates generated in the step 1300 may include a plurality of N+1 chained certificates Certificate_i with i from 1 to N+1 and N>1. The N+1 chained certificates may include:

- N chained certificates Certificate_i, with i from 1 to N, respectively related to or associated with N sets of device-specific data $D_i$, and
- optionally a final or last or bottom N+1$^{th}$ chained certificate for anti-replay purpose.

The generation step 1300 may include successively executing N certificate generation processes 1300_$L_i$, or generation processes, each certificate generation process 1300_$L_i$ allowing to generate one certificate Certificate_i of the N chained certificates. The N certificate generation processes 1300_$L_i$ may thus be layered (i.e., successively executed in layers $L_1$, $L_2$, ..., $L_N$).

With reference to figure 8, the first or top certificate generation process 1300_$L_1$ (i.e., for layer $L_1$) may include the following steps carried out by the key ladder 150 of the first computing device 100:

- in a step 1310_$L_1$, receiving the higher-level input value Cst_Auth through the input interface 152, and deriving, by the higher-level KDF module 154 (e.g., a decryption module), a higher-level symmetric key $K_2$, that is an intermediate key, from the UDS used as a key with the input value Cst_Auth;
- in a step 1320_$L_1$, receiving the lower-level input value Cst_Init through the input interface 153, and deriving, by the lower-level KDF module 155 (e.g., a decryption module), a lower-level symmetric key $K_{1,L1}$, that is a final derived key, from the intermediate key $K_2$ used as a key with the input value Cst_Init;
- in a step 1330_$L_1$, outputting from the key ladder 150 the lower-level symmetric key $K_{1,L1}$ through the output interface 156.

The secret UDS and the input values Cst_Auth and Cst_Init are obtained or read in the memory means 120 of the first computing device 100 and inputted to the key ladder 150 in the steps 1310_$L_1$ and 1320_$L_1$.

The first or top layer $L_1$ certificate generation process 1300_$L_1$ may further include a step 1340_$L_1$ of determining or measuring a first set of device-specific data $D_1$. This step 1340_$L_1$ can be carried out by the measurement module 160.

By definition, a set of device-specific data $D_1$, $D_2$, ... is specific to the first computing device 100. It allows to provide evidence of the authenticity of the first computing device 100 to another party, for example to the second computing device 200. It may allow to prove to the second computing device 200 or any other party that the first computing device 100 runs the correct hardware and software, based on evidence. The evidence may include hardware attributes like configuration(s), state(s), identifier(s) such as an UID (Unique Identifier), etc., and software attributes like version(s), code hash(es), etc. These items of evidence may be based on cryptography using unique keys of the first computing device 100. For example, the set of device-specific data allows the second computing device 200 or other party to validate at least an operating state of the first computing device 100. It may also allow the second computing device 200 or other party to validate the identity of the first computing device. However, it is emphasized that the use of the UDS to generate the chain of certificates allows to prove the identity of the first computing device 100.

The set of device-specific data can be self-measured, or self-determined, by the first computing device 100 (here by the measurement module 160), for example when executing the generation process $1300\_L_i$. It can represent a software state of the first computing device 100 (e.g., versions, hashes of software components, ...), and/or a hardware state of the first computing device 100 (e.g., debug configuration, hardware fusing configuration, ...), or a combination of a software state and a hardware state of the first computing device 100.

In an embodiment, the set of device-specific data may include time information such as timestamp and/or validity period of the hardware and/or software state.

The set of device-specific data may include a collection of data elements (e.g., digital values) respectively representing information of different predetermined types related to the first computing device 100. Each data element may for example represent a property, an operating parameter or state, and/or a component (e.g., a software component or a hardware component) of the first computing device 100. In an embodiment, each type of data element may have a predetermined fixed length. In an embodiment, at least part of the data elements of the set of device-specific data may be hashed, for example to be mapped to predetermined fixed-length (or fixed-size) values. The data elements may be hashed in a predetermined (given) order to obtain the set of device-specific data $D_1$, $D_2$, etc. Thus, the set of device-specific data may include the data itself or a hash of the data or a mix of the data and a hash of the data. In any case, it should be clear for the second computing device 200 how to recompute the authentication tag.

In an illustrative and non-limitative embodiment, the set of device-specific data $D_i$ with $1 \leq i \leq N$ may include a collection of DICE input values as specified in the specifications Open Profile for DICE v2.5. These input values can include code (64 bytes), configuration data (64 bytes), authority data (64 bytes), mode decision (1 byte), hidden inputs (64 bytes). In accordance with the DICE specifications, the input values can be hashed in this order: code, configuration data, authority data, mode decision, hidden inputs. The hashed input values can be

referred by "$H_i$(code+ config + authority + mode + hidden)". For example, a boot procedure of the first computing device 100 may include different stages carried out by executing different software components, respectively. The software component of each stage of the boot procedure may be hashed and used by the key ladder 150. The certification chain can thus attest that the first computing device 100 performed the boot procedure correctly using the correct software and hardware.

However, the present disclosure is not limited to the DICE input values and applies more generally to any set of device-specific data as above defined.

In a step $1350\_L_1$, the first measured or determined set of device-specific data $D_1$ (e.g., $H_1$(code+ config + authority + mode + hidden)) is provided as input to the AE module 170.

In a step $1360\_L_1$, the first computing device 100 encrypts the set of device-specific data $D_1$ (e.g., H1(code+ config + authority + mode + hidden)) and generates an authentication tag $TAG_1$ from the set of device-specific data $D_1$, by executing the algorithm of authenticated encryption using the derived symmetric or secret key $K_{1,L1}$ as an encryption key and the set of device-specific data $D_1$ as input data. The expression $E_{K_{1,L1}}(D_1)$ refers to encryption of the set of device-specific data $D_1$ with the derived key $K_{1,L1}$ serving as cryptographic key. The step $1360\_L_1$ can be carried out by the AE module 170.

In a step $1370\_L_1$, the first computing device 100 generates a first or top certificate Certificate_1. This first certificate Certificate_1 can include the following data:

- the UDS identifier UDS_ID of the first computing device 100;
- the first set of device-specific data D1 (e.g., $H_1$ (code+ config + authority + mode + hidden));
- the authentication tag $TAG_1$.

The UDS_ID may be obtained from the memory means 120 of the first computing device 100. The set of device-specific data $D_1$ may be provided by the measurement module 160. The authentication tag $TAG_1$ may be provided by the AE module 170.

The attestation method 100 may further comprise a step $1380\_L_1$ of providing the encrypted set of device-specific data $E_{K_{1,L1}}(D_1)$ for the subsequent certificate generation process (i.e., for the next or following certificate generation process), as input to the key ladder 150. More precisely, the encrypted first set of device-specific data $E_{K_{1,L1}}(D_1)$ is transmitted to the lower-level input interface 153 of the key ladder 150 for the subsequent certificate generation process, here for the second certificate generation process $1300\_L_2$.

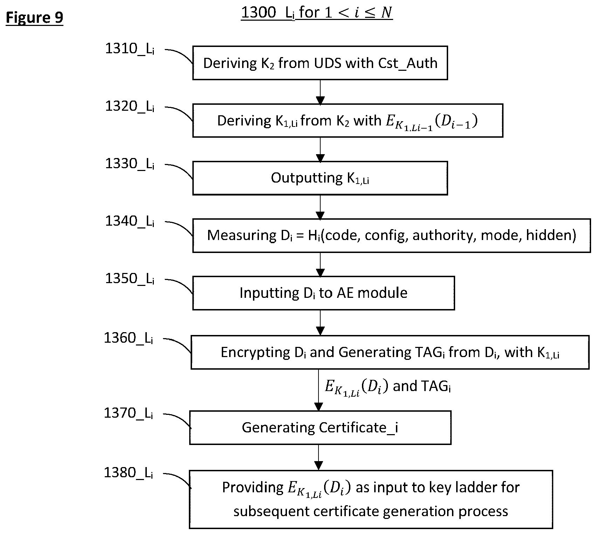

After executing the first certificate generation process $1300\_L_1$, each subsequent certificate generation process $1300\_L_i$, from the second certificate generation process to the $N^{th}$ certificate generation process (i.e., at each layer i, with $1 < i \le N$), includes the steps 1310_$L_i$ to 1380_$L_i$ described below and illustrated in figure 9.

With reference to figure 9, the $i^{th}$ certificate generation process 1300_$L_i$ with $1 < i \le N$ is similar or analogous to the first certificate generation process 1300_$L_1$, but only differ from it by some features that will be apparent in the description given below.

In the step 1310_$L_i$, the key ladder 150 receives the higher-level input value Cst_Auth through the input interface 152, and derives, through the higher-level KDF module 154 (e.g., a decryption module), the symmetric key $K_2$ from the UDS used as a key with this input value Cst_Auth.

In the step 1320_$L_i$, the key ladder 150 receives as lower-level input the previous encrypted set of device-specific data $E_{K_{1,Li-1}}(D_{i-1})$ (i.e., the encrypted set of device-specific data produced by the preceding generation process), and derives, through the lower-level KDF module 155 (e.g., a decryption module), a symmetric key $K_{1,Li}$ (namely, a lower-level symmetric key) from the intermediate or higher-level key $K_2$ used as a key with this lower-level input value $E_{K_{1,Li-1}}(D_{i-1})$.

In the step 1330_$L_i$, the key ladder 150 outputs the symmetric key $K_{1,Li}$.

In the step 1340_$L_i$, the first computing device 100 determines or measures a $i^{th}$ set of device-specific data $D_i$ (e.g., $H_i$(code + config + authority + mode + hidden)). The successive sets of device-specific data $D_1$, $D_2$, ..., $D_N$ may be different from one another. For example, in $H_i$(code + config + authority + mode + hidden), at least the code data is different.

In the step 1350_Li, the first computing device 100 inputs the set of device specific data $D_i$ (e.g., $H_i$(code+ config + authority + mode + hidden)) into the AE module 170.

In the step 1360_Li, the first computing device 100 encrypts the set of device-specific data $D_i$ (e.g., $H_i$(code+ config + authority + mode + hidden)) to produce the encrypted set of device-specific data $E_{K_{1,Li}}(D_i)$ and generates an authentication tag $TAG_i$ from the set of device-specific data $D_i$, by executing the algorithm of authenticated encryption using the derived symmetric or secret key $K_{1,Li}$ as an encryption key and the set of device-specific data $D_i$ as input data. This step 1360_Li may be performed by the AE module 170.

In the step 1370_Li, the first computing device 100 generates the $i^{th}$ certificate Certificate_i including the UDS identifier UDS_ID of the first computing device 100, the set of device-specific data Di (e.g., Hi(code+ config + authority + mode + hidden)), and the authentication $TAG_i$. The step 1370_Li may be performed by the generator 180.

In the step 1380_i, the encrypted set of device-specific data $E_{K_{1,Li}}(D_i)$ is provided for the subsequent certificate generation process (i.e., for the next or following certificate generation process at layer $L_{i+1}$), as input to the key ladder 150, the encrypted set of device-specific data $E_{K_{1,Li}}(D_i)$ being transmitted to the lower-level input interface 153 of the key ladder 150 to be used as lower-level input value in the subsequent certificate generation process, at layer $L_{i+1}$.

Optionally, after executing the N certificate generation processes 1300_Li with $1 \le i \le N$, the attestation method may further include a $N+1^{th}$ certificate generation process 1300_$L_{N+1}$ of generating a $N+1^{th}$ or final certificate including the challenge data CH_D (e.g., a nonce value) received by the first computing device 100 from the second computing device 200.

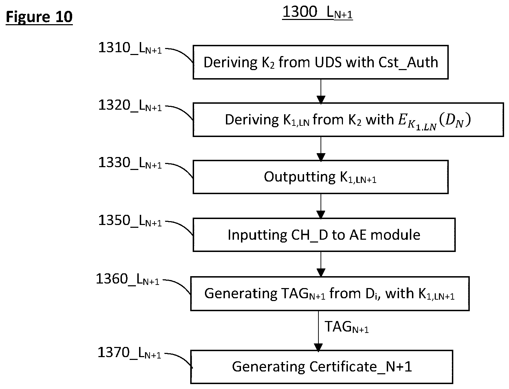

The $N+1^{th}$ generation process 1300_$L_{N+1}$ may include the steps 1310_$L_{N+1}$ to 1380_$L_{N+1}$ described below and illustrated in figure 10.

The $N+1^{th}$ certificate generation process 1300_$L_{N+1}$ is similar or analogous to any certificate generation process at layer $L_i$ with $1 < i \le N$, but only differ from it by some features that will be apparent in the description below.

In the $N+1^{th}$ certificate generation process 1300_$L_{N+1}$, the first computing device 100 embeds or includes the challenge data CH_D in the $N+1^{th}$ certificate, and the authentication tag $TAG_{N+1}$ is generated from the challenge data CH_D, instead of a set of device-specific data.

In the step 1310_$L_{N+1}$, the key ladder 150 receives the higher-level input value Cst_Auth through the input interface 152, and derives, through the higher-level KDF module 154 (e.g., a decryption module), the symmetric key $K_2$ from the UDS used as a key with the input value Cst_Auth.

In the step 1320_$L_{N+1}$, the key ladder 150 receives, through the lower-level input interface 153, the encrypted set of device-specific data $E_{K_{1,LN}}(D_N)$ produced by the $N^{th}$ certificate generation process as lower-level input, and derives, through the lower-level KDF module 155 (e.g., a decryption module), a symmetric key $K_{1,LN+1}$ (namely, a lower-level symmetric key) from the intermediate key $K_2$ used as a key with this lower-level input value $E_{K_{1,LN}}(D_N)$.

In the step 1330_$L_{N+1}$, the key ladder 150 outputs the symmetric key $K_{1,LN+1}$.

In the step 1350_$L_{N+1}$, the first computing device 100 inputs the challenge data CH_D, received from the second computing device 200 for example in the step 1200, into the AE module 170 as input data to encrypt. The $N+1^{th}$ certificate generation process may not include a step of measuring or determining a set of device-specific data.

In the step 1360_$L_{N+1}$, the AE module 170 generates an authentication tag $TAG_{N+1}$ from the challenge data CH_D, by executing the algorithm of authenticated encryption using the derived symmetric or secret key $K_{1,LN+1}$ as an encryption key and the challenge data CH_D as input data. In the present embodiment, the AE module 170 may also encrypt the challenge data CH_D, when executing the authenticated encryption algorithm, but the encrypted challenge data may not be retained and/or used by the first computing device 100.

Then, in the step 1370_L_{N+1}, the first computing device 100 generates the N+1^{th} certificate Certificate_N+1 including the UDS identifier UDS_ID of the first computing device 100, the challenge data CH_D, and the authentication tag TAG_{N+1}.

It should be noted that the higher-level input value Cst_Auth received by the key ladder 150 through the higher-level input interface 152 is a predetermined constant that is the same for all the certificate generation processes 1300_L_i at layer L_i with $1 \leq i \leq N + 1$.

As previously described, the N+1 chained certificates are transmitted from the first computing device 100 to the second computing device 200, in the step 1400.

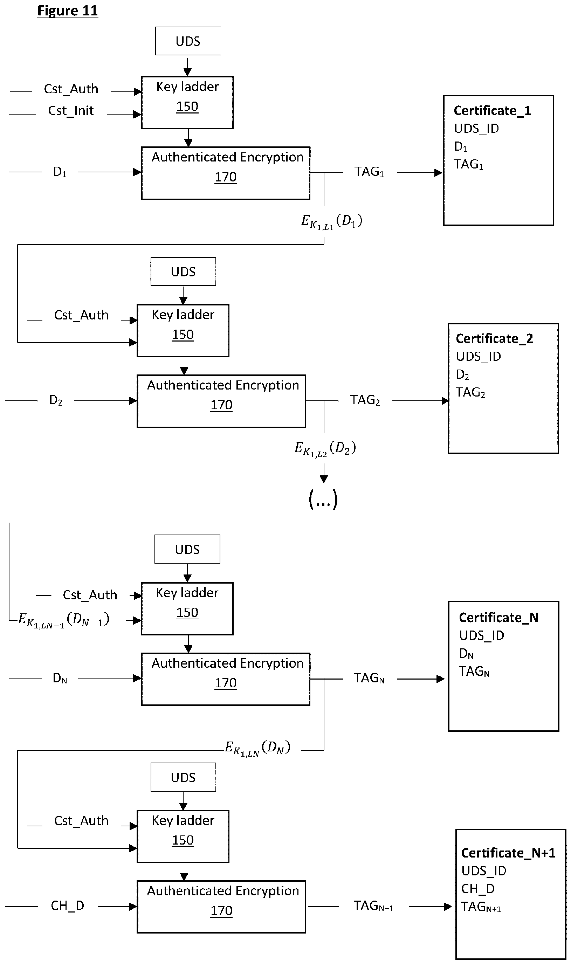

Figure 11 shows an overview of the attestation method carried out by the first computing device 100 to generate the chained certificates Certificate_1, Certificate_2, ..., Certificate_N+1, according to the first Embodiment.

A single key ladder 150 may be used to derive the multiple keys K_2 and K_{1,Li} for any layer L_i with $1 \leq i \leq N + 1$. This key ladder 150 may be similarly configured for all layers L_i with $1 \leq i \leq N + 1$ so as to execute the same cryptographic algorithms using the same UDS and Cst_Auth, as previously described.

In another embodiment, the single key 150 may be configured differently for different layers L_i with $1 \leq i \leq N + 1$, for example to execute different cryptographic algorithms and/or use different UDS and/or input value like Cst_Auth.

In another embodiment, the first computing device 100 may include a plurality of key ladders (i.e., different key ladders). For example, the first computing device 100 may include N+1 key ladders. In that case, a different key ladder may be used to derive the keys K_2 and K_{1,Li} at each layer L_i with $1 \leq i \leq N + 1$.

In any case, the second computing device 200 should be configured in a similar manner to the first computing device 100 to be able to perform similar computations.

In a step 1450, the second computing device 200 may receive the N+1 chained certificates Certificate_i with $1 \leq i \leq N + 1$ transmitted by the first computing device 100.

As previously mentioned, each certificate Certificate_i, for $1 \leq i \leq N + 1$, may include:

- a UDS identifier, UDS_ID;
- for $1 \leq i \leq N$, a set of device-specific data D_i (e.g., H_i (code+ config + authority + mode + hidden));
- for $i = N + 1$, the challenge data CH_D; and
- an authentication tag TAG_i.

In the final stage, in other words for $i = N + 1$, the data used as input of the key ladder 150 could be the challenge data CH_D (e.g., a nonce) as above described. Alternatively, this input data of the key ladder 150 in the final stage (for $i = N + 1$) could be a hash of the challenge data CH_D or any other data, or hash of data, as long as it is clear for the second computing device 200 how to recompute the authentication tag TAG_{N+1}.

The certificate Certificate_i may include additional information such as expiration information, validity time information, application specific data (e.g., symmetric or asymmetric keys or nonce or any local application data that needs to be sent to the second computing device 200 and linked to the chain of trust provided through the remote attestation), etc.

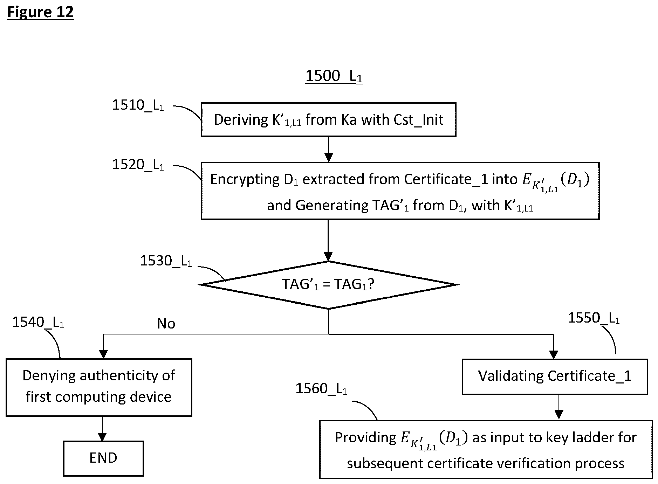

In the step 1500, the second computing device 200 verifies the validity of the N+1 chained certificates. This verification step 1500 may be layered, and include successively executing N+1 certificate verification processes 1500_L_i, with $1 \leq i \leq N + 1$, of verifying one certificate of the N+1 chained certificates Certificate_i. Each certificate verification process 1500_L_i includes the steps, carried out by the second computing device 200, as described below and with reference to figures 12, 13 and 14.

As shown in figure 12, the first or top certificate generation process 1500_L_1, includes a step 1510_L_1, of:

- retrieving from the memory means 220 the key Ka that is associated with the UDS identifier UDS_ID included in the certificate Certificate_1,
- receiving, by the key derivation module 250, the initial input value Cst_Init (stored in the memory means 220) through the input interface 252, and
- deriving, through the key derivation module 250, a symmetric key $K'_{1,L1}$ from the symmetric key Ka used as a key with the initial input value Cst_Init.

In an embodiment, the key derivation module 250 may execute the same cryptographic algorithm(s) (e.g., a decryption algorithm) as the one(s) executed by the lower-level module 155 of the key ladder 150 of the first computing device 100. The key Ka and the initial input value Cst_Init may be obtained in the memory means 220 of the second computing device 200. As previously indicated, they may have been provisioned in the second computing device 200 during the provisioning process 1150.

In the step 1520_L_1, the AE module 270 of the second computing device 200 encrypts the set of device-specific data D_1 (e.g., H_1(code+ config + authority + mode + hidden)), extracted from the first or top certificate Certificate_1, and generates a verification tag TAG'_1 from this set of device-specific data D_1, using the Ka-derived symmetric key $K'_{1,L1}$ as a key. The encryption of the set of device specific data D_1 with the Ka-derived symmetric key $K'_{1,L1}$ is referred as $E_{K'_{1,L1}}(D_1)$.

In the step 1530_L_1, the certificate verification module 280 compares the verification tag TAG'$_1$ generated by the second computing device 200 in the step 1520_L$_1$ and the authentication tag TAG$_1$ extracted from the certificate Certificate_1 to verify if they match.

If the verification tag TAG'$_1$ generated by the second computing device 200 and the authentication tag TAG$_1$ extracted from the certificate Certificate_1 match (i.e., if they are identical), the second computing device 200 validates the certificate Certificate_1, in a step 1550_L$_1$.

If the verification tag TAG'$_1$ and the authentication tag do not match, the second computing device 200 denies (i.e., does not validate) the certificate Certificate_1 and consequently denies (i.e., does not validate) the authenticity of the first computing device 100, in a step 1540_L$_1$. The verification method 1500 is ended. Optionally, the second computing device 200 may generate a non-validation message indicating that the authenticity of the first computing device 100 has been denied. This message may be conveyed to a user through the user interface 240 of the second computing device 200 and/or transmitted to the first computing device 100 through the network 300.

If the certificate Certificate_1 has been successfully validated, the second computing device 200 may provide the encrypted set of device-specific data

$$E_{K'_{1,L1}}(D_1)$$

as an input to the key derivation module 250 for the subsequent certificate verification process, here 1500_L$_2$, in a step 1560_L$_1$.

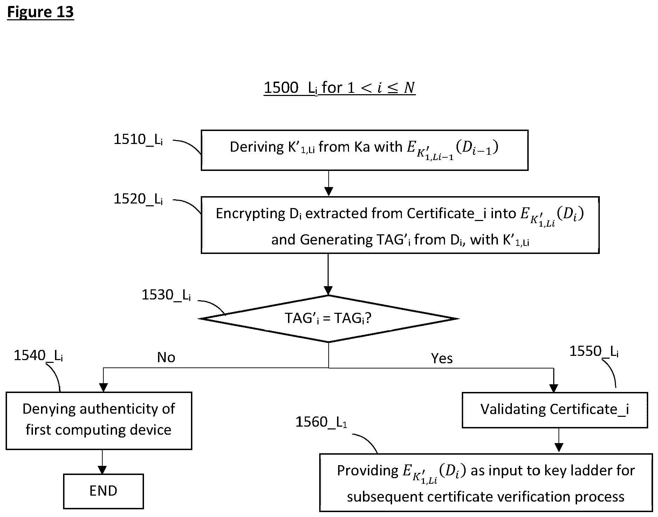

After executing the first certificate verification process 1500_L$_1$, each subsequent certificate verification process, from the second certificate verification process to the N$^{th}$ certificate verification process (i.e., at each layer i, with $1 < i \leq N$), includes the steps 1510_Li to 1560_Li described below and illustrated in figure 13.

The certificate verification process 1500_L$_i$ is similar or analogous to the first certificate verification process 1500_L$_1$, but only differ from it by some features that will be apparent in the description below.

In the step 1510_L$_i$, the second computing device 200:

- retrieves from the memory means 220 the key Ka that is associated with the UDS identifier UDS_ID included in the certificate Certificate_i,
- receives, by the key derivation module 250, the input value $E_{K'_{1,Li-1}}(D_{i-1})$ through the input interface 252, and
- derives, through the key derivation module 250, a symmetric key $K'_{1,Li}$ from this symmetric key Ka used as a key with the input value $E_{K'_{1,Li-1}}(D_{i-1})$.

The key Ka may be obtained from the memory means 220 of the second computing device 200. The input value $E_{K'_{1,Li-1}}(D_{i-1})$ has been produced in the preceding certificate verification process 1500_L$_{i-1}$. In an embodiment, in the step 1510_L$_i$, the key derivation module 250 may execute the same cryptographic algorithm(s) (e.g., a decryption algorithm) as the one(s) executed by the lower-level module 155 of the key ladder 150 of the first computing device 100.

In the step 1520_L$_i$, the AE module 270 of the second computing device 200 may encrypt the set of device-specific data D$_i$ (e.g., H$_i$(code+ config + authority + mode + hidden)), extracted from the certificate Certificate_i, and generate a verification tag TAG'$_i$ from this set of device-specific data D$_i$, using the Ka-derived symmetric key $K'_{1,Li}$ as a key. The encryption of the set of device specific data D$_i$ with the Ka-derived symmetric key $K'_{1,Li}$ is referred as $E_{K'_{1,Li}}(D_i)$.

In the step 1530_L$_i$, the certificate verification module 280 compares the verification tag TAG'$_i$ generated by the second computing device 200 in the step 1520_L$_i$ and the authentication tag TAG$_i$ extracted from the certificate Certificate_i to verify if they match (i.e., if they are identical).

If the verification tag TAG'$_i$ generated by the second computing device 200 and the authentication tag TAG$_i$ extracted from the certificate Certificate_i match, the second computing device 200 validates the certificate Certificate_i, in a step 1550_L$_i$.

If the verification tag TAG'$_i$ and the authentication tag TAG$_i$ do not match, the second computing device 200 denies (i.e., does not validate) the certificate Certificate_i and consequently denies (i.e., does not validate) the authenticity of the first computing device 100, in a step 1540_L$_i$. The verification method 1500 is ended. The second computing device 200 may generate a non-validation message indicating that the authenticity of the first computing device 100 has been denied. This message may be conveyed to a user through the user interface 240 of the second computing device 200 and/or transmitted to the first computing device 100 through the network 300.

If the certificate Certificate_i has been successfully validated, the second computing device 200 may provide the encrypted set of device-specific data $E_{K'_{1,Li}}(D_i)$ for the subsequent certificate verification process 1500_L$_{i+1}$ as an input to the key derivation module 250, here 1500_L$_{i+1}$, in a step 1560_L$_i$.

Optionally, after executing the N certificate verification processes 1500_Li with $1 \leq i \leq N$, the attestation method carried out by the second computing device 200 may further include a N+1$^{th}$ certificate verification process 1500_$L_{N+1}$ of verifying the validity of the N+1$^{th}$ or final or bottom certificate Certificate_N+1, that is an anti-replay certificate. This final certificate Certificate_N+1 may include the challenge data CH_D (e.g., a nonce value) transmitted by the second computing device 200 from the first computing device 100.

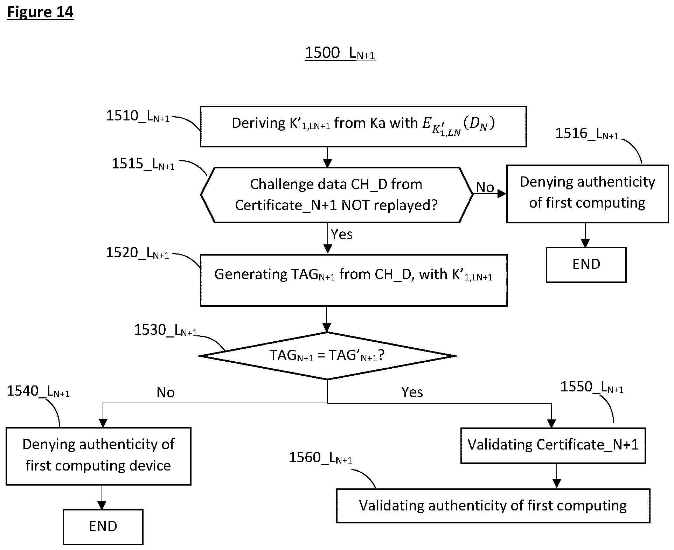

As shown in figure 14, the N+1$^{th}$ verification process 1300_$L_{N+1}$ may include the steps 1510_$L_{N+1}$ to 1560_$L_{N+1}$ described below.

The N+1$^{th}$ certificate verification process 1500_$L_{N+1}$ may be similar or analogous to any certificate verification process 1500_Li at layer $L_i$ with $1 < i \le N$, but only differ from it by some features that will be apparent in the description below.

In the N+1$^{th}$ or last certificate verification process 1500_$L_{N+1}$, the second computing device 200 verifies if the challenge data CH_D included in the N+1$^{th}$ or last certificate Certificate_N+1 is is not replayed and, in a positive event only, it generates a verification tag TAG'$_{N+1}$ from this challenge data CH_D, and the authentication tag TAG$_{N+1}$ and compares it with the authentication tag TAG$_{N+1}$ included in the final certificate Certificate_N+1. In an embodiment, in case the challenge data CH_D (e.g., a nonce) was transmitted from the second device 200 to the first device 100 in association with an expiration time (e.g., an expiration date) and the first computing device's identity, the second computing device 200 may verify if the first computing device 100 has provided the chain of certificates associated with the challenge data CH_D (e.g., the nonce) before this expiration time or date has expired. If the expiration time has already expired, the attestation with the challenge_data (e.g., nonce) is refused. The attestation can only be accepted if the chain of certificates is received by the second computing device 200 before expiration of the expiration time. Optionally, after expiration of the expiration time, a new challenge data (e.g., a new nonce) can be generated.

More precisely, in the step 151 0_$L_{N+1}$, the second computing device 200:

- retrieves from the memory means 220 the key Ka that is associated with the UDS identifier UDS_ID included in the certificate Certificate_N+1,
- receives, by the key derivation module 250, the input value $E_{K'_{1,LN}}(D_N)$ that has been produced in the preceding certificate verification process 1500_$L_N$, through the input interface 252, and
- derives, through the key derivation module 250, a symmetric key $K'_{1,LN+1}$ from this symmetric key Ka used as a key with the input value $E_{K'_{1,LN}}(D_N)$.

In a step 515_$L_{N+1}$, the second computing device 200 may verify if the challenge data CH_D (e.g., a nonce) included in the certificate Certificate_N+1 is not replayed (i.e., if it is used for the first time in a chain of certificates).

In a negative event, in other words if the challenge data CH_D included in the certificate Certificate_N+1 has already been played or used in another chain of certificates, the authenticity of the first computing device 100 is denied in a step 1516_$L_{N+1}$, and the attestation method is ended.

In a positive event, if the challenge data CH_D included in the certificate Certificate_N+1 has not already been played or used in another chain of certificates, the process goes to the next step 1520_$L_{N+1}$ of generating a verification tag TAG'$_{N+1}$ from the challenge data CH_D extracted from the certificate Certificate_N+1. The generation of the verification tag TAG'$_{N+1}$ is performed by the AE module 270 of the second computing device 200. In the present embodiment, the AE module 270 may also encrypt the challenge data CH_D, when executing the authenticated encryption algorithm, but the encrypted challenge data $E_{K'_{1,LN+1}}$ (CH_D) may not be retained and/or used by the second computing device 200.

In the step 1530_$L_{N+1}$, the certificate verification module 280 compares the verification tag TAG'$_{N+1}$ generated by the second computing device 200 in the step 1520_$L_{N+1}$ and the authentication tag TAG$_{N+1}$ extracted from the final certificate Certificate_N+1 to verify if they match.

If the tag TAG'$_i$ does not match the tag TAG$_i$, the second computing device 200 denies (i.e., does not validate) the certificate Certificate_i and consequently denies (i.e., does not validate) the authenticity of the first computing device 100, in a step 1540_$L_{N+1}$. The verification method 1500 is ended. The second computing device 200 may generate a non-validation message indicating that the authenticity of the first computing device 100 has been denied. This message may be conveyed to a user through the user interface 240 of the second computing device 200 and/or transmitted to the first computing device 100 through the network 300.

If the tag TAG'$_{N+1}$ matches the tag TAG$_{N+1}$, the second computing device 200 validates the certificate Certificate_N+1, in a step 1550_$L_{N+1}$.

Furthermore, after the last successful certificate validation in the step 1550_$L_{N+1}$, as all the chained certificates Certificate_i from i=1 to i=N+1 have been successfully validated, the second computing device 200 validates the authenticity of the first computing device 100, in the step 1560_$L_{N+1}$.

Second Embodiment

The second Embodiment is based on the first Embodiment and only differs from the first Embodiment by the features described below.

A main difference between the second Embodiment and the first Embodiment is that, in the second Embodiment, the attestation engine 190 of the first computing device 100 includes an encryption module and a tag generator, which are separate and/or distinct, instead of one authenticated encryption module 170 configured to simultaneously perform encryption and tag generation. In the second Embodiment, the encryption module and the tag generator may be coupled but configured to respectively use a first key $K_{1A,Li}$ and a second key $K_{1B,Li}$, different from each other, to respectively encrypt a set of device-specific data $D_i$ and generate the authentication tag $TAG_i$ from said set of device-specific data $D_i$ in the certificate generation process at any layer $L_i$ with $1 \leq i \leq N$. For that purpose, the first computing device 100 may be provided or provisioned with two different higher-level input values $Cst\_Auth_A$ and $Cst\_Auth_B$. The input values $Cst\_Auth_A$ and $Cst\_Auth_B$ may be stored in the memory means 120.

As illustrative and non-limitative examples, the encryption module may be configured to perform a block cipher. This block cipher may be configured to operate in CBC (cipher Block Chaining) mode, or in CBC-CS1 (Cipher Block Chaining - CipherStealing 1) mode, or in CTR (Counter) mode. The tag generator may be configured to generate CMAC or HMAC use CBC/CBC-CS1/CTR encryption mode coupled with CMAC (block cipher-based message authentication code) or a HMAC (Hash-based message authentication code).

In this second Embodiment, the key ladder 150 of the first computing device 100 is configured to:

- derive a first higher-level key $K_{2A}$, through the higher-level module 154, from the UDS used as a key with the first higher-level input value $Cst\_Auth_A$, and
- derive the lower level key $K_{1A,Li}$ from $K_{2A}$, through the lower-level module 155, with the lower-level input that is either the initial value $Cst\_Init$ for the first or top layer $L_1$, or the encrypted set of device-specific data $E_{K1A,Li-1}(D_{i-1})$ provided by the preceding certificate generation process for each of the subsequent generation processes at layer $L_i$ with $1 < i \leq N + 1$.

Optionally, for the $N+1^{th}$ certificate generation process, the key ladder 150 may be configured not to derive a lower-level key $K_{1A,LN+1}$, as there is no need to perform data encryption with this key.

The key ladder 150 is also configured to:

- derive a second higher-level key $K_{2B}$, through the higher-level module 154, from the UDS used as a key with the second higher-level input value $Cst\_Auth_B$, and
- derive the lower level key $K_{1B,Li}$ from $K_{2B}$, through the lower-level module 155, with the lower-level input that is either the initial value $Cst\_Init$ for the first or top layer $L_1$, or the encrypted set of device-specific data $E_{K1A,Li-1}(D_{i-1})$ provided by the preceding certificate generation process for each of the subsequent generation processes at layer $L_i$ with $1 < i \leq N + 1$.

In the second Embodiment, in each certificate generation process at layer $L_i$ with $1 \leq i \leq N$:

- the key ladder 150 may derive the first symmetric key $K_{1A,Li}$ and the second symmetric key $K_{1B,Li}$, different from one another, from the UDS used as a key, respectively with $Cst\_Auth_A$ and $Cst\_Auth_B$ as higher-level input value;
- the set of device-specific data $D_i$ may be encrypted by the encryption module with the first symmetric key $K_{1A,Li}$ to produce $E_{K\_1A,Li}(D_i)$; and
- the authentication tag $TAG_i$ may be generated, by the tag generator, from the set of device-specific data $D_i$ with the second symmetric key $K_{1B,Li}$.

In the $N+1^{th}$ certificate generation process:

- the key ladder 150 may derive the second symmetric key $K_{1B,LN+1}$ from the UDS used as a key with $Cst\_Auth_B$ as higher-level input value; and
- the authentication tag $TAG_{N+1}$ may be generated, by the tag generator, from the challenge data $CH\_D$ with the second symmetric key $K_{1B,LN+1}$.

In the $N+1^{th}$ certificate generation process, the encryption module does not need to encrypt data.

The key ladder 150 may use the same initial lower-level input value $Cst\_Init$ to derive the first key $K_{1A,L1}$ and the second key $K_{1B,L1}$, for example by changing the algorithm configured to derive these keys. Alternatively, the key ladder 150 may use two different lower-level input values $Cst\_Init_A$ and $Cst\_Init_B$ to respectively derive the first key $K_{1A,L1}$ and the second key $K_{1B,L1}$.

In the second Embodiment, the second computing device 100 may be provisioned with two UDS-derived keys Ka, Kb, both derived from the UDS of the first computing device 100. The key Ka may be derived from the UDS with the predetermined higher-level input value $Cst\_Auth_A$, and the key Kb may be derived from the UDS with the predetermined higher-level input value $Cst\_Auth_B$. These keys Ka, Kb respectively correspond to the first higher-level key $K_{2A}$ and to the second higher-level key $K_{2B}$ that will be derived, in operation, by the key ladder 150 of the first computing device 100 from its UDS used as a key respectively with the first higher-level input value $Cst\_Auth_A$ and the second higher-level input value $Cst\_Auth_B$.

The verification engine 290 of the second computing device 100 may include an encryption module and a tag generator, separate and/or distinct from each other, instead of one authenticated encryption module 270 configured to simultaneously perform the encryption and tag generation. The encryption module and the tag generator are configured to respectively use a first key $K'_{1A,Li}$ derived from Ka and a second key $K'_{1B,Li}$ derived from Kb to encrypt a set of device-specific data $D_i$ and to generate the authentication tag $TAG_i$ from said set of device-specific data $D_i$ in the certificate generation process at any layer $L_i$ with $1 \leq i \leq N$. For that purpose, the second computing device 200 may be provided or provisioned with two different higher-level input values Cst_Auth$_A$ and Cst_Auth$_B$. The input values Cst_Auth$_A$ and Cst_Auth$_B$ may be stored in the memory means 220.

In the second Embodiment, the key derivation module 250 is configured to derive a first key $K'_{1A,Li}$ from the key K$_a$ with the lower-level input that is either the initial value Cst_Init for the first or top layer L$_1$, or the encrypted set of device-specific data $E_{K'_{1A,Li-1}}(D_{i-1})$ provided by the preceding certificate verification process for each of the subsequent certificate verification processes at layer L$_i$ with $1 < i \le N + 1$.

Optionally, for the N+1$^{th}$ certificate generation process, the key derivation module 250 may be configured not to derive a key $K'_{1A,LN+1}$, as there is no need to perform data encryption with this key.

The key derivation module 250 may also be configured to derive key $K'_{1B,Li}$ from the key K$_b$ with the lower-level input that is either the initial value Cst_Init for the first or top layer L$_1$, or the encrypted set of device-specific data $E_{K'_{1A,Li-1}}(D_{i-1})$ provided by the preceding certificate verification process for each of the subsequent certificate verification processes at layer L$_i$ with $1 < i \le N + 1$.

In the second Embodiment, in each certificate verification process at layer L$_i$ with $1 \le i \le N$:

- the key derivation module 250 may derive the first symmetric key $K'_{1A,Li}$ and the second symmetric key $K'_{1B,Li}$, respectively from the symmetric keys Ka and Kb (pre-stored in memory);
- the set of device-specific data D$_i$ extracted from the certificate Certificate_i may be encrypted by the encryption module with the first symmetric key $K'_{1A,Li}$ to produce $E_{K'_{1A,Li}}(D_i)$; and
- the authentication tag TAG$_i$ may be generated, by the tag generator, from the set of device-specific data D$_i$ with the second symmetric key $K'_{1B,Li}$.

In the N+1$^{th}$ certificate verification process:

- the key derivation module 250 may derive the second symmetric key $K'_{1B,LN+1}$ from the symmetric key Kb; and
- the authentication tag TAG$_{N+1}$ may be generated, by the tag generator, from the challenge data CH_D extracted from the certificate Certificate_N+1 with this second symmetric key $K'_{1B,LN+1}$.

In the N+1$^{th}$ certificate verification process, the encryption module does not need to encrypt data.

According to the present disclosure, the attestation method, by which the first computing device 100 provides evidence of its authenticity to the second computing device 200, is implemented based on at least one key ladder. Many existing computing devices are already provided with a key ladder. Therefore, the present attestation method can be implemented on existing key ladders.

Many key ladders are using symmetric keys and symmetric cryptographic algorithms. However, a key ladder may be capable of using asymmetric key(s) and asymmetric cryptography. The present attestation method and system are not limited to symmetric keys and symmetric cryptography but could be implemented based on asymmetric keys and asymmetric cryptography, or on a mix of symmetric keys and asymmetric keys and a mix of symmetric cryptography and asymmetric cryptography. The present authentication method and system could be implemented using different combinations of key derivation functions KDFs, that may be symmetric or asymmetric, and/or different cryptographic algorithms that may be symmetric or asymmetric.

The present attestation method allows validation of all the keys at all layers of the generation of the chain of certificates. If one key is comprised, for example changed by a false key, when generating the chain of certificates by the first computing device, this chain of certificates will not be validated by the second computing device and the authenticity of the first computing device will be denied. For example, even in case that an encrypted data set $E_{K1,Li}(D_i)$ used as input by the key ladder 150 is intercepted, nobody can simply implement the rest of the certificate generation without breaking the internal components of the key ladder 150 (for example, what exact combination of KDF and symmetric algorithm is performed by the key ladder 150) and the UDS key. The security of the present attestation scheme cannot be broken in case if key leakage or key compromise.

According to the present disclosure, the UDS of the first computing device does not need to be shared with the second computing device. The second computing device only needs to access one or more UDS-derived symmetric keys, for example K$_a$ or (K$_a$, K$_b$), and an initial value Cst_Init, to validate the chained certificates. These data elements are less sensitive data, and may be transmitted to the second computing device without security precautions or with less security precautions.

Furthermore, the present attestation method can be based on symmetric cryptography, which allows to achieve the attestation method very quickly and without consuming too much memory. It can also be quantum-resistant.

Other advantages of the present attestation method are given below:

- it can be implemented on existing hardware by using existing key ladder;
- the reporting process used to make the UDS-derived key Ka, and optionally the UDS-derived key Kb, available to the second computing device 200 is already in place, for example for DICE;
- all the keys used to attest integrity or authenticity of the first computing device 100 can be validated;
- the security of the present scheme cannot be broken if the USD is simply leaked;
- the present scheme does not expose the USD on the second computing device.

The above advantages are not available in the DICE solution.

FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

**Claims**

1. A computer-implemented method for attesting authenticity of a first computing device (100), said first computing device (100) being provisioned with a unique device secret, UDS, the method including the steps, performed by the first computing device, of:

   generating an N chained certificate[s], the N chained certificate[s] attesting the authenticity of an N set[s] of device-specific data ($D_i$) of the first computing device (100); and
   transmitting the N chained certificate[s] to a second computing device (200);
   wherein the step of generating the N chained certificate[s] comprises a generation process that includes the steps of:

   A. deriving (1310_Li, 1320_$L_i$), using a key ladder (150), a key ($K_{1,Li}$) from the UDS;
   B. generating (1360_Li) an authentication tag ($TAG_i$) from a set of device-specific data, using the key;
   C. generating (1370_$L_i$) a certificate, said certificate including the set of device-specific data and the authentication tag ($TAG_i$);
   D. encrypting the set of device-specific data with the key ($K_{1,Li}$); and
   E. providing the encrypted set of device-specific data ($E_{K1,Li}(D_i)$) as an input to the key ladder (150) for a subsequent generation process (1300_$L_{i+1}$).

2. The method according to claim 1, wherein, in the step A., the key ladder (150) has at least two levels and carries out the steps of:

   - receiving (1310_$L_i$) a higher-level input value (Cst_Auth); and
   - deriving (1310_$L_i$) a higher-level key ($K_2$) from the UDS used as a key or from a UDS-derived key with the higher-level input value (Cst_Auth).

3. The method according to claim 2, wherein the higher-level input value received by the key ladder (150) includes a predetermined constant (Cst_Auth) that is the same for all the generation processes.

4. The method according to claim 2 or 3, wherein, in the step A., the key ladder (150) further carries out the step of:

   - deriving the key ($K_{1,Li}$) from the higher-level key ($K_2$) with a lower-level input value.

5. The method according to claim 4, wherein, in the step A.,

   - for a first generation process (1300_$L_1$), the key ladder (150) receives a predetermined initial value (Cst_Init) as lower-level input value;
   - for each of subsequent generation processes (1300_$L_i$), the key ladder (150) receives the encrypted set of device-specific data $E_{K1,Li-1}(D_{i-1})$ provided by the preceding generation process (1300_$L_{i-1}$) as lower-level input value.

6. The method according to any of claims 1 to 5, wherein, the steps B. and D. are combined by executing an authenticated encryption algorithm so as to simultaneously encrypt the set of device-specific data ($D_i$) and generate the authentication tag ($TAG_i$) from the set of device-specific data with the key ($K_{1,Li}$) derived from the UDS in the step A.

7. The method according to any of claims 1 to 5, wherein, in the step A., the key ladder (150) derives two keys ($K_{1A,Li}$, $K_{1B,Li}$), different from one another, from the UDS used as a key, and:

- in the step B., the authentication tag ($TAG_i$) is generated with one ($K_{1B,Li}$) of the two keys;
- in the step C., the set of device-specific data ($D_i$) is encrypted with the other ($K_{1A,Li}$) of the two keys.

8. The method according to claim 7 when depending on claim 2, wherein the two keys ($K_{1A,Li}$, $K_{1B,Li}$) are separately derived from the UDS by the key ladder (150) using respectively a first higher-level input value ($Cst\_Auth_A$) and a second higher-level input value ($Cst\_Auth_B$), different from one another.

9. The method according to any of claims 1 to 8, wherein, in the step B., the authentication tag ($TAG_i$) is a block cipher-based message authentication code.

10. The method according to any of claims 1 to 9, further comprising a generation process ($1300\_L_{N+1}$) of generating a final certificate, said generation process including the steps of:

    - receiving (1200) challenge data (Ch_D) from the second computing device (200);
    - receiving, by a key ladder (150), an encrypted set of device-specific data ($E_{K_{1,LN}}(D_N)$) provided by the preceding generation process ($1300\_L_N$);
    - deriving, by the key ladder (150), a key ($K_{1,LN+1}$) from the UDS using said encrypted set of device-specific data ($E_{K_{1,LN}}(D_N)$) as input data;
    - generating a final tag ($TAG_{N+1}$) from the challenge data using the key ($K_{1,LN+1}$);
    - generating ($1370\_L_{N+1}$) the final certificate including the challenge data (Ch_D) and the final tag ($TAG_{N+1}$).

11. The method according to any of claims 1 to 10, wherein the step A. is performed by executing a cryptographic algorithm including at least one of a decryption algorithm and an encryption algorithm, at each of a plurality of levels of the key ladder (150).

12. A computer implemented method for attesting the authenticity of a first computing device (100) provisioned with a unique device secret UDS, by a second computing device (200) provisioned with a key (Ka) that is derived from the UDS of the first computing device (100), the method comprising the steps of:

    - receiving (1450), by the second computing device (200), from the first computing device (100), an N chained certificate[s] generated by performing the method according to any of claims 1 to 11; and
    - verifying, by the second computing device (200), the validity of the N chained certificate[s];

wherein the step of verifying the validity of the N chained certificate[s] comprises a verification process ($1500\_L_i$), performed by the second computing device (200), that includes the steps of:

    F. deriving ($1510\_L_i$), by a key derivation module (250), a key ($K'_{1,Li}$) from said provisioned key (Ka);
    G. generating ($1520\_Li$) a verification tag ($TAG'_i$) from a set of device-specific data ($D_i$) included in a certificate to be verified using the key ($K'_{1,Li}$);
    H. comparing the verification tag ($TAG'_i$) and an authentication tag ($TAG_i$) included in the certificate to be verified;
    I. if the verification tag ($TAG'_i$) and the authentication tag ($TAG_i$) match, validating ($1550\_Li$) the certificate;
    J. encrypting ($1520\_Li$) the set of device-specific data ($D_i$) included in the certificate to be verified with the key ($K'_{1,Li}$); and
    K. providing the encrypted set of device-specific data ($E_{K'_{1,Li}}(D_i)$) as an input to the key derivation module (250) for a subsequent verification process ($1500\_L_{i+1}$).

13. The method according to claim 12, wherein said provisioned key (Ka) corresponds to the higher-level key ($K_2$) generated by the key ladder (150) in the step A of the method according to claim 2.

14. The method according to claim 13, wherein, in a first verification process ($1500\_L_1$), the step F includes receiving ($1510\_L_1$) as input, by the key derivation module (250), a predetermined initial value (Cst_Init) that is the same as the predetermined initial value received by the key ladder (150) as lower-level input in the first generation process ($1300\_L_1$) of the method according to claim 5.

15. A first computing device (100) comprising at least one key ladder (150) and means adapted to execute the steps of the method of any of claims 1 to 11.

16. A second computing device (200), comprising at least one key derivation module (250) and means adapted to execute the steps of the method of any of claims 12 to 14.

17. A system comprising the first computing device (100) according to claim 15 and a second computing device (200) according to claim 16.

**Figure 1**

**Figure 2**

**Figure 3**

190

UDS

150

151

Key ladder

Cst_Auth

152

154 $K_2$

Cst_Init or
$E_{K_{1,Li-1}}(D_{i-1})$

153

155 $K_{1,Li}$

156

172

170

160

$D_i$

173

171

175

174

$E_{K\_1,Li}(D_i)$  $TAG_i$

180

Certificate_i

**Figure 4**

**Figure 5**

**Figure 6**

1000

1100

| Provisioning first computing device with :<br>UDS, Cst_Auth, Cst_Init |
| --- |

1150

| Provisioning second computing device with :<br>Ka, Cst_Init |
| --- |

1200

| Transmitting request for attestation from second<br>computing device to first computing device |
| --- |

1300

| Generating chain of certificates by<br>first computing device |
| --- |

1400

| Transmitting chain of certificates from first<br>computing device to second computing device |
| --- |

1450

| Receiving, by second computing<br>device, chain of certificates |
| --- |

1500

| Verifying, by second computing<br>device, chain of certificates |
| --- |

**Figure 7A**

1100

1110 — Pre-generating UDS and assigning UDS to first computing device

1120 — Storing UDS and UDS_ID in first computing device

1130 — Storing Cst_Auth and Cst_Init in first computing device

**Figure 7B**

1150

1160 — Deriving Ka from UDS with Cst_Auth

1170 — Storing Ka and UDS_ID in second computing device

1180 — Storing Cst_Init in second computing device

**Figure 8**

$1300\ L_1$

$1310\_L_1$ — Deriving $K_2$ from UDS with Cst_Auth

$1320\_L_1$ — Deriving $K_{1,L1}$ from $K_2$ with Cst_Init

$1330\_L_1$ — Outputting $K_{1,L1}$

$1340\_L_1$ — Measuring $D_1 = H_1$(code, config, authority, mode, hidden)

$1350\_L_1$ — Inputting $D_1$ to AE module

$1360\_L_1$ — Encrypting $D_1$ and Generating $TAG_1$ from $D_1$, with $K_{1,L1}$

$E_{K_{1,L1}}(D_1)$ and $TAG_1$

$1370\_L_1$ — Generating Certificate_1

$1380\_L_1$ — Providing $E_{K_{1,L1}}(D_1)$ as input to key ladder for subsequent certificate generation process

24

**Figure 9**

<u>1300  $L_i$ for $1 < i \leq N$</u>

1310_$L_i$ — Deriving $K_2$ from UDS with Cst_Auth

1320_$L_i$ — Deriving $K_{1,Li}$ from $K_2$ with $E_{K_{1,Li-1}}(D_{i-1})$

1330_$L_i$ — Outputting $K_{1,Li}$

1340_$L_i$ — Measuring $D_i = H_i$(code, config, authority, mode, hidden)

1350_$L_i$ — Inputting $D_i$ to AE module

1360_$L_i$ — Encrypting $D_i$ and Generating $TAG_i$ from $D_i$, with $K_{1,Li}$

$E_{K_{1,Li}}(D_i)$ and $TAG_i$

1370_$L_i$ — Generating Certificate_i

1380_$L_i$ — Providing $E_{K_{1,Li}}(D_i)$ as input to key ladder for subsequent certificate generation process

**Figure 10**

1300_L$_{N+1}$

1310_L$_{N+1}$ — Deriving K$_2$ from UDS with Cst_Auth

1320_L$_{N+1}$ — Deriving K$_{1,LN}$ from K$_2$ with $E_{K_{1.LN}}(D_N)$

1330_L$_{N+1}$ — Outputting K$_{1,LN+1}$

1350_L$_{N+1}$ — Inputting CH_D to AE module

1360_L$_{N+1}$ — Generating TAG$_{N+1}$ from D$_i$, with K$_{1,LN+1}$

TAG$_{N+1}$

1370_L$_{N+1}$ — Generating Certificate_N+1

**Figure 11**

**Figure 12**

$$1500\_L_1$$

1510_$L_1$ — Deriving K'$_{1,L1}$ from Ka with Cst_Init

1520_$L_1$ — Encrypting D$_1$ extracted from Certificate_1 into $E_{K'_{1,L1}}(D_1)$ and Generating TAG'$_1$ from D$_1$, with K'$_{1,L1}$

1530_$L_1$ — TAG'$_1$ = TAG$_1$?

1540_$L_1$ — No

Denying authenticity of first computing device

END

1550_$L_1$ — Validating Certificate_1

1560_$L_1$ — Providing $E_{K'_{1,L1}}(D_1)$ as input to key ladder for subsequent certificate verification process

**Figure 13**

$$\underline{1500 \ L_i \text{ for } 1 < i \le N}$$

1510_$L_i$ — Deriving K'$_{1,Li}$ from Ka with $E_{K'_{1,Li-1}}(D_{i-1})$

1520_$L_i$ — Encrypting D$_i$ extracted from Certificate_i into $E_{K'_{1,Li}}(D_i)$ and Generating TAG'$_i$ from D$_i$, with K'$_{1,Li}$

1530_$L_i$ — TAG'$_i$ = TAG$_i$?

No

1540_$L_i$ — Denying authenticity of first computing device

END

Yes

1550_$L_i$ — Validating Certificate_i

1560_$L_1$ — Providing $E_{K'_{1,Li}}(D_i)$ as input to key ladder for subsequent certificate verification process

**Figure 14**

$$\underline{1500}\ L_{N+1}$$

$1510\_L_{N+1}$ — Deriving $K'_{1,LN+1}$ from Ka with $E_{K'_{1,LN}}(D_N)$

$1515\_L_{N+1}$ — Challenge data CH_D from Certificate_N+1 NOT replayed?

$1516\_L_{N+1}$ — Denying authenticity of first computing

— No → Denying authenticity of first computing → END

Yes ↓

$1520\_L_{N+1}$ — Generating $TAG_{N+1}$ from CH_D, with $K'_{1,LN+1}$

$1530\_L_{N+1}$ — $TAG_{N+1} = TAG'_{N+1}$?

$1540\_L_{N+1}$ — No

$1550\_L_{N+1}$ — Yes

Denying authenticity of first computing device → END

$1560\_L_{N+1}$ — Validating Certificate_N+1 → Validating authenticity of first computing

## Figure 15

**Certificate_1**
UDS_ID
$D_1$
$TAG_1$

Ka

Cst_Init → Key Derivation 250 → $K'_{1,L1}$

$D_1$ → Authenticated Encryption 270 → $TAG'_1$

$TAG_1$

$E_{K'_{1,L1}}(D_1)$

OK/NOK

**Certificate_2**
UDS_ID
$D_2$
$TAG_2$

Ka

Key Derivation 250 → $K'_{1,L2}$

$D_2$ → Authenticated Encryption 270 → $TAG'_2$

$TAG_2$

$E_{K'_{1,L2}}(D_2)$

OK/NOK

$E_{K'_{1,LN-1}}(D_{N-1})$ (...)

**Certificate_N**
UDS_ID
$D_N$
$TAG_N$

Ka

Key Derivation 250 → $K'_{1,LN}$

$D_N$ → Authenticated Encryption 270 → $TAG'_N$

$TAG_N$

$E_{K'_{1,LN}}(D_N)$

OK/NOK

**Certificate_N+1**
UDS_ID
CH_D
$TAG_{N+1}$

Ka

Key Derivation 250 → $K'_{1,LN}$

CH_D → Authenticated Encryption 270 → $TAG'_{N+1}$

$TAG_{N+1}$

OK/NOK

**Figure 16 (Prior Art)**

Europäisches
Patentamt

European
Patent Office

Office européen
des brevets

# EUROPEAN SEARCH REPORT

**Application Number**

EP 24 16 1561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/038272 A1 (HERSHMAN ZIV [IL] ET AL) 3 February 2022 (2022-02-03) * paragraph [0002] - paragraph [0112] * * figures 1-5A * | 1-17 | INV. H04L9/40 G06F21/44 G06F21/57 |
| X | CN 109 492 352 B (HUAWEI TECH CO LTD) 29 January 2021 (2021-01-29) * paragraph [0019] - paragraph [0125] * | 1-17 | |
| A | US 2020/312136 A1 (MONDELLO ANTONINO [IT] ET AL) 1 October 2020 (2020-10-01) * paragraph [0045] - paragraph [0407] * | 1-17 | |
| A | US 2021/028933 A1 (MEDVINSKY ALEXANDER [US] ET AL) 28 January 2021 (2021-01-28) * paragraph [0003]; figure 5 * | 1,15,17 | |
| A | US 2018/189493 A1 (SCHILDER MARIUS [US] ET AL) 5 July 2018 (2018-07-05) * paragraph [0125] * | 1,15,17 | |
| A | US 2024/073490 A1 (BIEBER YANN [CH] ET AL) 29 February 2024 (2024-02-29) * paragraph [0017]; figure 2 * | 1,15,17 | TECHNICAL FIELDS SEARCHED (IPC) H04L G06F |

The present search report has been drawn up for all claims

| Place of search | Date of completion of the search | Examiner |
|---|---|---|
| Munich | 9 August 2024 | Ghomrasseni, Z |

EPO FORM 1503 03.82 (P04C01)

# EP 4 614 879 A1

## ANNEX TO THE EUROPEAN SEARCH REPORT
## ON EUROPEAN PATENT APPLICATION NO.

EP 24 16 1561

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2024

| Patent document cited in search report | | Publication date | Patent family member(s) | | Publication date |
|---|---|---|---|---|---|
| US 2022038272 | A1 | 03-02-2022 | CN | 114065176 A | 18-02-2022 |
| | | | JP | 7113123 B2 | 04-08-2022 |
| | | | JP | 2022028632 A | 16-02-2022 |
| | | | TW | 202207664 A | 16-02-2022 |
| | | | US | 2022038272 A1 | 03-02-2022 |
| CN 109492352 | B | 29-01-2021 | NONE | | |
| US 2020312136 | A1 | 01-10-2020 | CN | 113826351 A | 21-12-2021 |
| | | | EP | 3949255 A1 | 09-02-2022 |
| | | | JP | 2022528070 A | 08-06-2022 |
| | | | KR | 20210132216 A | 03-11-2021 |
| | | | US | 2020312136 A1 | 01-10-2020 |
| | | | US | 2022277650 A1 | 01-09-2022 |
| | | | WO | 2020197724 A1 | 01-10-2020 |
| US 2021028933 | A1 | 28-01-2021 | US | 2021028933 A1 | 28-01-2021 |
| | | | US | 2022407690 A1 | 22-12-2022 |
| | | | WO | 2021016577 A1 | 28-01-2021 |
| US 2018189493 | A1 | 05-07-2018 | CN | 108269605 A | 10-07-2018 |
| | | | CN | 115019874 A | 06-09-2022 |
| | | | TW | 201824289 A | 01-07-2018 |
| | | | TW | 201921372 A | 01-06-2019 |
| | | | US | 2018189493 A1 | 05-07-2018 |
| | | | US | 2019163909 A1 | 30-05-2019 |
| | | | WO | 2018125325 A1 | 05-07-2018 |
| US 2024073490 | A1 | 29-02-2024 | BR | 112018011779 A2 | 04-12-2018 |
| | | | CN | 108476134 A | 31-08-2018 |
| | | | EP | 3369206 A1 | 05-09-2018 |
| | | | SG | 11201804616V A | 30-07-2018 |
| | | | US | 2019020933 A1 | 17-01-2019 |
| | | | US | 2020404392 A1 | 24-12-2020 |
| | | | US | 2023033476 A1 | 02-02-2023 |
| | | | US | 2024073490 A1 | 29-02-2024 |
| | | | WO | 2017108727 A1 | 29-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *ETSI TS 103 162 V1.1.1*, October 2010